# EUROPEAN PATENT SPECIFICATION

(11) **EP 4 658 697 B1**
(45) Date of publication and mention of the grant of the patent: **04.11.2026**
(21) Application number: 24777042.3
(22) Date of filing: 12.09.2024
(51) Int. Cl.: C08G 18/10, C08G 18/48, C08G 18/64, C08G 18/72, C08J 9/00, C08J 9/02, C08K 3/016, C08K 3/04

(54) **FOAM COMPOSITION COMPRISING PARTIALLY HYDROLYSED COLLAGEN**
SCHAUMZUSAMMENSETZUNG MIT TEILWEISE HYDROLYSIERTEM KOLLAGEN
COMPOSITION DE MOUSSE COMPRENANT DU COLLAGÈNE PARTIELLEMENT HYDROLYSÉ

(30) Priority: 13.09.2023 GB 202313979; 02.07.2024 GB 202409565
(43) Date of publication of application: 10.12.2025
(73) Proprietor: Scottish Leather Group Limited, Bridge of Weir, Renfrewshire PA11 3RN (GB)
(72) Inventor: HADLEY, Scott, Birmingham West Midlands B13 9QP (GB); BOWDEN, Warren, Renfrewshire PA11 3RN (GB)
(74) Representative: Murgitroyd & Company
(86) International application number: PCT/GB2024/052381
(87) International publication number: WO 2025/056911

(56) References cited:
- CN-A- 105 056 279
- US-A- 4 327 195

## Description

### Technical Field

The invention relates to foam compositions and articles which comprise collagen. This collagen foam can be used as the alternative to the conventional polyol foams which are typically used in interior seating in the aviation, automotive or rail sectors. The invention further relates to a collagen foam insert which can be used in upholstery, the manufacture of soft furnishings, mattresses, seats, pillows, sofas, chairs, armchairs, and/or cushions. The invention further relates to a method of manufacturing a foam composition. The invention further relates to a kit comprising a collagen foam composition and a mould.

### Background of the Invention

Typically, foam components used in interior seating are made of a polyol foam material which includes a base polyol (such as a polyurethane polyol), a cross-linker (such as isocyanate), a surfactant and water. The reaction of the polyol with the cross-linker forms a structured polyol foam. This polyol foam, such as a polyurethane foam, can be moulded into a suitable shape, and used as a component in interior seating or other soft furnishings. Such interior seating is widely used in a number of industries, including in the automotive, aviation and rail sectors.

The conventional materials used to manufacture the polyurethane foam are not renewable materials. The polyols used in the manufacture of polyurethane foam are derived from non-renewable sources and take energy to manufacture. One source of polyols, for example, are derivatives of petrochemicals. Further, the production of the polyols from petrochemicals is an energy intensive process. The method of manufacturing conventional polyurethane foams, therefore, has a damaging impact upon the environment. Whilst foam compositions with reduced polyol content have been provided by including a filler or non-functional component in the foam, such foams do not show the same strength, density and flame-retardant properties as conventional polyurethane foams (i.e., foams containing no filler). US4327195A discloses a polyurethane comprised of the reaction product of a polyisocyanate and a polyreactive hydrogen compound having a polypeptide admixed therewith.

Collagen is the main protein found in skins and hides. Collagen is widely used in many industries owing to its elastic and resilient properties, such as in the biomedical, biotechnology and beauty industries. Bovine collagen is a highly available source of
collagen, as it is a by-product generated by the meat industry. There is, therefore, a demand for replacing products manufactured using petrochemicals with by-products from other industries, to provide a more sustainable method of manufacture.

There is, therefore, a need for alternative foam materials made using components which are made using more sustainable and environmentally friendly materials.

### Summary of the Invention

The inventors of the present invention have determined that partially hydrolysed collagen has a natural foaming capacity when acidified. The inventors have discovered that partially hydrolysed collagen, when acidified by an organic acid source, can be combined with conventional polyol foam materials to produce a solid foam article with increased density, durability and fire retardancy, when compared to foam articles containing conventional fillers. Such foam articles have the advantage of being durable, comfortable and fire-resistant, whilst also having a reduced petrochemical content (which is environmentally beneficial).

The inventors have further determined that, in the presence of an organic acid, the partially hydrolysed collagen chemically reacts with the polyol/cross-linking agent present in the foam mixture. The benefit of this reaction is the production of a foam, using sustainable materials, which displays the same functionality (and in some cases improved functionality) to that of conventional polyurethane foams. By using partially hydrolysed collagen in the material, the petrochemical content of the foam composition is reduced.

Crucially, the inventors have discovered that it is the combination of partially hydrolysed collagen and organic acid in the foam composition which provides a foam article with improved durability, comfort and fire-resistance.

The present invention provides an alternative foam article, wherein the foam article is made from a foam composition which comprises a partially hydrolysed collagen and an organic acid. Advantageously, the requisite concentration of polyols in the foam article, such as polyurethane is reduced. The foam composition comprises partially hydrolysed collagen which may be provided by partially hydrolysed bovine collagen.

In a first aspect of the invention there is provided a foam composition for use in the manufacture of a foam article, optionally a seat insert or mattress, the foam composition comprising:
i. 15%w/w to 50%w/w partially hydrolysed collagen;
ii. 30%w/w to 60%w/w one or more polyols;
iii. 15%w/w to 40%w/w cross-linking agent; and
iv. 0.5%w/w to 3%w/w organic acid,
wherein the partially hydrolysed collagen has a Bloom gel strength score of between 300g and 600g as measured according to the method defined in ISO9665.

Suitably, the method may be as defined in ISO9665:1998. Suitably, the method as defined in ISO9665 is obtained from https://www.iso.org/standard/26847.html.

According to a second aspect of the invention, there is provided a foam composition for use in the manufacture of a foam article, optionally a seat insert or mattress, the foam composition comprising:
i. 15%w/w to 50%w/w partially hydrolysed collagen;
ii. 30%w/w to 60%w/w one or more polyols;
iii. 15%w/w to 40%w/w cross-linking agent; and
iv. 0.5%w/w to 3%w/w organic acid,
wherein the partially hydrolysed collagen has a Bloom gel strength score of between 300g and 600g, wherein the Bloom gel strength score is determined by measuring the weight in grams required to depress a gel solution a distance of 4 mm with a piston having a cross-sectional area of 1 cm², suitably wherein the gel solution comprises between 5 to 8%w/w, suitably 6 to 7%w/w, suitably 6.67%w/w of the partially hydrolysed collagen, and wherein the gel solution has been maintained at 10°C for 17 to 18 hours.

Features of the second aspect of the invention may be combined with features of the first aspect of the invention.

The below describes features of the first and second aspects of the invention.

Advantageously, a foam composition as described herein provides foam which can be moulded as per the user's required shape; for example a foam that can be used as a foam seat article. The foam composition can be used to manufacture foam seat articles for the furnishing, leisure, aviation, rail and automotive industries. Advantageously, the foam composition can be used to manufacture foam articles for use in soft furnishings, upholstery, mattresses, seats, cushions, pillows and other furniture comprising foam articles. Advantageously the foam composition can be used as an alternative to conventional fillers used in polyol foam, such as a polyurethane foam. Advantageously, the foam composition of the invention comprises components sourced from more sustainable materials. Advantageously, the introduction of partially hydrolysed collagen into the foam composition reduces the required volume of polyols, which may not be derived from sustainable materials. Advantageously, a foam composition comprising these features provides a foam article which has identical physical properties to conventional polyurethane foam articles.

Advantageously, the partially hydrolysed collagen in the foam composition can provide natural flame-retardant properties. Without wishing to be bound by theory, the inventors consider that, in the presence of an organic acid, the partially hydrolysed collagen in the composition chemically binds with the cross-linking agent and/or polyol in the composition, creating a polymer, in which the partially hydrolysed collagen is integrated. This is in contrast to conventional fillers, which do not integrate with the polyols, creating a foam article with an inhomogeneous texture.

Optionally, the partially hydrolysed collagen may be selected from partially hydrolysed bovine collagen, partially hydrolysed ovine collagen, partially hydrolysed equine collagen, partially hydrolysed marine collagen or partially hydrolysed porcine collagen. The partially hydrolysed collagen may be any sourced from any suitable source.

Preferably, the partially hydrolysed collagen may be bovine collagen. Advantageously, in the presence of an organic acid, the partially hydrolysed bovine collagen is considered to be suitable for reacting with cross-linking agents, such as isocyanate, and polyols to create a foam polymer. Advantageously, partially hydrolysed bovine collagen exhibits similar expansion properties to those of conventional polyol foam compositions.

Preferably, the partially hydrolysed collagen may be ovine collagen. Advantageously, partially hydrolysed ovine collagen may be more economically efficient than other sources of collagen.

Optionally, the foam composition may comprise between 15% w/w and 50% w/w partially hydrolysed collagen. More preferably, the foam composition may comprise between 20%w/w and 50%w/w partially hydrolysed collagen. More preferably, the foam composition may comprise between 20%w/w and 45%w/w partially hydrolysed collagen. More preferably, the foam composition may comprise between 20%w/w and 40%w/w partially hydrolysed collagen. More preferably, the foam composition may comprise between 20%w/w and 35%w/w partially hydrolysed collagen. More preferably, the foam composition may comprise between 20%w/w and 30%w/w partially hydrolysed collagen. More preferably, the foam composition may comprise about 20%w/w partially hydrolysed collagen.

Optionally, the foam composition may comprise between 15 and 50% w/w partially hydrolysed bovine collagen. More preferably, the foam composition may comprise between 20%w/w and 50%w/w partially hydrolysed bovine collagen. More preferably, the foam composition may comprise between 20%w/w and 45%w/w partially hydrolysed bovine collagen. More preferably, the foam composition may comprise between 20%w/w and 40%w/w partially hydrolysed bovine collagen. More preferably, the foam composition may comprise between 20%w/w and 35%w/w partially hydrolysed bovine collagen. More preferably, the foam composition may comprise between 20%w/w and 30%w/w partially hydrolysed bovine collagen. More preferably, the foam may comprise about 20%w/w partially hydrolysed bovine collagen.

Optionally, the foam composition may comprise between 15 and 50% w/w partially hydrolysed ovine collagen. More preferably, the foam composition may comprise between 20%w/w and 50%w/w partially hydrolysed ovine collagen. More preferably, the foam composition may comprise between 20%w/w and 45%w/w partially hydrolysed ovine collagen. More preferably, the foam composition may comprise between 20%w/w and 40%w/w partially hydrolysed ovine collagen. More preferably, the foam composition may comprise between 20%w/w and 35%w/w partially hydrolysed ovine collagen. More preferably, the foam composition may comprise between 20%w/w and 30%w/w partially hydrolysed ovine collagen. More preferably, the foam may comprise about 20%w/w partially hydrolysed ovine collagen.

Advantageously, these ranges of partially hydrolysed collagen provide a foam composition which uses by-product materials and reduces the need for foam compositions made from petrochemical materials. Advantageously, these ranges of partially hydrolysed collagen provide the optimal concentration of partially hydrolysed collagen for making a foam article which retains the physical properties of conventional polyurethane foam articles. Advantageously, these ranges of partially hydrolysed collagen, in the presence of an organic acid, provide a foam composition where the partially hydrolysed collagen is biochemically reacted with the polyols and/or isocyanate to create a polymer. Without wishing to be bound by the theory, the inventors consider that the organic acid in the foam composition facilitates an ionic bond formation between the NH₄ groups of the partially hydrolysed collagen form and the OH groups of the one or more polyols. Advantageously, such a polymer provides a foam composition which can be moulded into a stronger foam article, compared to conventional foam articles made with polyols and filler materials, the use of the partially hydrolysed collagen provides a stronger, bonded, foam composition which does not degrade as quickly. Advantageously, the foam article made from the foam composition of the first or second aspects has improved fire-retardancy.

Advantageously, the concentration of partially hydrolysed collagen in the foam composition can be varied to alter the mechanical strength and fire-resistant properties of the foam composition. Advantageously, the concentration of partially hydrolysed collagen in the foam composition can be varied to create a foam composition which meets the mechanical strength and fire-resistant properties of the user's requirements. Advantageously, concentration of partially hydrolysed collagen in the foam composition can be modified to meet the mechanical strength and fire-resistant properties of the user's requirements, whilst simultaneously using a sustainable material to reduce the petrochemical content of the foam composition.

Optionally, the foam composition may comprise one or more polyols with a molecular weight between 180Da and 6500Da. Preferably, the foam composition may comprise one or more polyols with a molecular weight between 1000Da and 6000Da.

Optionally, the foam composition may comprise one or more polyols with a functionality between 1.0 and 8.0. Optionally, the foam composition may comprise one or more polyols with a functionality between 1.8 and 3.0. Optionally, the foam composition may comprise one or more polyols with a functionality between 2.0 and 3.0.

Optionally, the foam composition may comprise one or more polyols with a weight concentration of between 30%w/w to 60%w/w. Preferably, the foam composition may comprise one or more polyols with a weight concentration of between 40%w/w to 60%w/w. Preferably, the foam composition may comprise one or more polyols with a weight concentration of between 40 to 50%w/w. Preferably, the foam composition may comprise one or more polyols with a weight concentration of about 50%w/w.

Optionally, the foam composition comprises one or more polyols, wherein the one or more polyols are selected from a polyester polyol, a polyether polyol, a polycarbonate polyol and an acrylic polyol. Preferably, the one or more polyols are selected from the polyurethane sub-types of polyols. Preferably, the one or more polyols are selected from a polyester polyurethane polyol and a polyether polyurethane polyol. Preferably the foam composition comprises a polyether polyurethane polyol.

Optionally, the foam composition may comprise a polyether polyol with a weight concentration of between 30%w/w to 60%w/w. Preferably, the foam composition may comprise a polyether polyol with a weight concentration of between 40%w/w to 60%w/w. Preferably, the foam composition may comprise a polyether polyol with a weight concentration of between 40%w/w to 50%w/w. Preferably, the foam composition may comprise a polyether polyol with a weight concentration of about 50%w/w.

Optionally, the foam composition may comprise two or more polyols. Advantageously, the provision of two or more polyols in the foam composition allows the properties of the foam composition to be customised to the user's requirements. Advantageously, the blend of two or more polyols can provide for a polyol mixture with varying molecular weights and functionalities. Advantageously, the blend of two or more polyols provides a foam composition which can be further altered to meet the desired density, resilience, fire retardant properties and thermal insulation properties.

Optionally, the foam composition may comprise 20%w/w to 50%%w/w cross-linking agent. Preferably, the foam composition comprises 20%w/w to 40%w/w cross-linker. Preferably, the foam composition comprises about 30%w/w cross-linker.

Optionally, the cross-linking agent of the foam composition may be an isocyanate. Optionally, the cross-linking agent may be any cross-linker known in the art. Preferably, the foam composition comprises 15%w/w to 40%w/w isocyanate. Preferably, the foam composition comprises 20%w/w to 40%w/w isocyanate. Preferably, the foam composition comprises about 30%w/w isocyanate.

Optionally, a foam article made from the foam composition of the first or second aspects has an Indentation Hardness Index score of between 300N and 600N at 40%/30seconds indentation, as measured according to BS EN ISO 2439.

Optionally, a foam article made from the foam composition of the first or second aspects has a classification of severe, very severe or extremely severe, as defined by BS 3379:2005 using the constant load pounding test disclosed in BS EN ISO 3385:1995.

Advantageously, the collagen in the foam composition is partially hydrolysed. Hydrolysis of collagen converts insoluble collagen into gelatine. The process of hydrolysing collagen into gelatine involves shortening the protein chains of collagen to an extent that the gelatine is entirely water soluble. During the process of hydrolysing collagen into gelatine, the three polypeptide strands found in collagen molecules (tropocollagen strands) separate into globular random coils. Gelatine will typically give a clear solution in water.

Unlike gelatine, partial hydrolysis of collagen can result in a material which is mid-way between a collagen and gelatine substance. The partially hydrolysed collagen is partially water soluble. This contrasts with natural collagen, which is insoluble in water; and gelatine which is soluble in water.

The partially hydrolysed collagen of the present invention has been hydrolysed to an extent that the triple helix collagen forming molecule has been untangled, resulting in individual tropocollagen molecules.

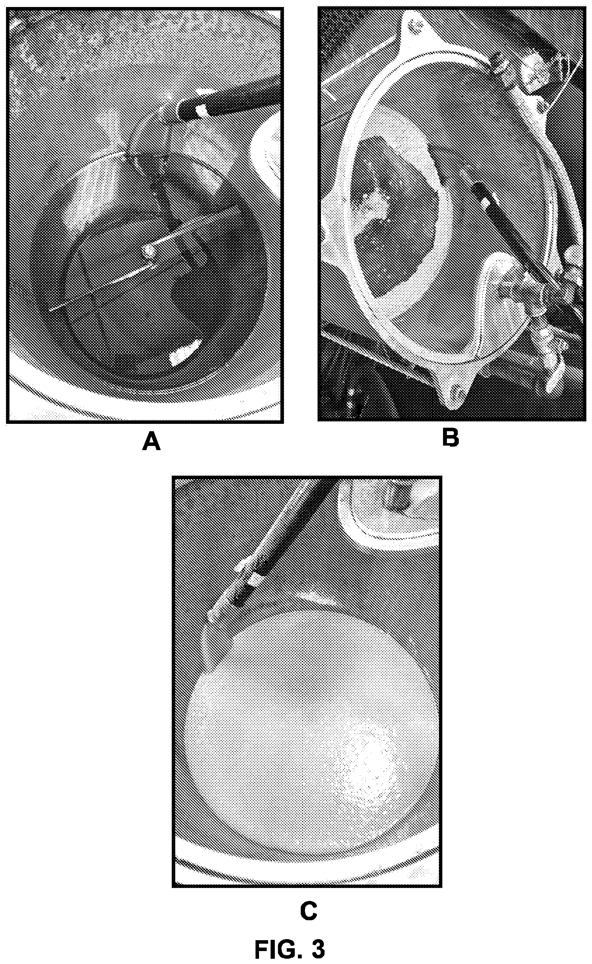

The partially hydrolysed collagen is preferably at least partly water insoluble, and preferably at least partly water soluble. As disclosed in Fig. 3B and C, when added to a polyol solution, the partially hydrolysed collagen forms a cloudy mixture, with some of the partially hydrolysed collagen dissolved, and some of the partially hydrolysed collagen forming an emulsion with the polyol solution.

The inventors have determined that the partially hydrolysed collagen solubilises in water at a maximum concentration of 4%w/w. Thereafter, the partially hydrolysed collagen can only be solubilised using additional heat and/or agitation. This contrasts to gelatine which solubilises up to 7% w/w in water to form a gel. Collagen which has been completely hydrolysed solubilises at 10%w/w or more in water.

Protein analysis suggests that partially hydrolysed collagen is approximately 41% hydrolysed, compared to fully hydrolysed collagen/gelatine which is typically 95% hydrolysed.

In the art, the strength of a gel is typically measured using a 'Bloom gel strength' value. The bloom value is a measure of the stiffness of the gel, reflecting the average molecular weight of its constituents. The test is typically measured in accordance with a standard test as known in the art, for example the standard test as set out in ISO9665. The test determines the weight in grams needed by a plunger (typically with a 0.5 inch diameter) to depress the surface of the gel by 4 mm without breaking it, at a specified temperature. The solution should kept for 17-18 hours at 10 °C, at a concentration of 6.67% solution, prior to being tested.

Gelatine subjected to a Bloom test would typically provide a range of between 30g and 300g Bloom score. A Bloom score of below 150g is considered to be a 'low bloom', a Bloom score between 150g and 220g is considered a 'medium bloom' and a Bloom score between 220g and 300g is considered to be a 'high bloom'.

The term partially hydrolysed collagen is intended to cover any hydrolysed collagen substrate which exhibits a Bloom score of between 300g and 600g. Preferably, the partially hydrolysed collagen exhibits a bloom score between 300g and 500g. Preferably, the partially hydrolysed collagen exhibits a bloom score between 350g and 400g.

Table 1 below discloses the Bloom Gel strength scores for the varying hydrolysis states of collagen.

**Table 1: Bloom Gel strength scores for the varying hydrolysis states of collagen.**

| Composition | Bloom gel strength (grams) |
|---|---|
| Collagen | 0g |
| Partially Hydrolysed collagen | 350g-400g |
| Gelatine | 150g-250g |
| Peptides | 0g |

Optionally, the partially hydrolysed collagen has a molecular weight of at least 60 kDa, optionally at least 70 kDa, optionally from 60kDa to 150 kDa, optionally from 70 kDa to 120 kDa, optionally from 70kDa to 100 kDa, optionally from 75kDa to 95 kDa, optionally from 75 kDa to 85 kDa, optionally about 80kDa.

Optionally, the partially hydrolysed collagen has an average particle size of 200µm or less, preferably 100µm or less. Optionally, the partially hydrolysed collagen has an average particle size of between 200µm and 10µm. In a preferred embodiment, the average particle size is in the range of 10 to 100µm.

Advantageously, the use of this partially hydrolysed collagen results in a protein which is soluble in solution, but also exhibits foaming characteristics. By virtue of its high Bloom gel strength, the invention can advantageously be used as a gelling agent and has emulsifying properties. The inventors determined that collagen which has been partially hydrolysed and exhibits a Bloom score of between 300g and 600g is soluble in a polyol solution and capable of emulsification, but is also capable of interacting with the polyols in the solution to create a foam. The inventors discovered that this could not be achieved by using collagen (i.e., collagen which is not partially hydrolysed) (which does not solubilise in a polyol solution) or gelatine (which does not form a foam). Advantageously, the partially hydrolysed collagen is capable of solubilisation in the foam composition without further addition of solvents. Such solvents would be required when using standard collagen fillers which have not been partially hydrolysed.

Advantageously, the partially hydrolysed collagen provides for an improved formation of a polymer. Without wishing to be bound by theory, the inventors consider that when an organic acid is present in the foam composition, the partially hydrolysed collagen biochemically reacts with the cross-linking agent and polyol in the composition, creating a polymer, in which the partially hydrolysed collagen is integrated.

Partially hydrolysed collagen may be obtained commercially, e.g. products sold under the trade name Kapro B95, available from D.C.P Ingredients B.V.

The partially hydrolysed collagen may be produced in the method described in WO2011/149356, which is incorporated herein by reference, namely:
i. producing at a temperature of 50°C or less a wet collagen product by subjecting a hide or skin to a size reduction step;
ii. an alkaline and/or an oxidizing treatment step;
iii. a neutralizing step; and
iv. followed by drying of said wet collagen product using a contact dryer, to obtain said collagen powder.

Optionally, the drying is carried out using a contact dryer having a surface temperature of more than 150 °C, preferably 155 °C or higher, preferably 160 °C or higher, more preferably 165 ±4 °C. Optionally, the drying is carried out for between 10 seconds and 5 minutes, preferably 15 seconds and 2 minutes.

Optionally, the temperature of the steps for producing the wet collagen product are kept at 45 °C or less and preferably 40 °C or less.

Optionally, the alkaline and/or oxidizing treatment is performed at a pH value of 10 or more, preferably 11 or more, more preferably 12 or more.

Optionally, the neutralizing treatment results in a pH value of 6 or less, preferably from 5 to 6.

Preferably the animal hide is subjected to grinding during the size reduction step. Optionally a second stage size reduction step may be performed. Optionally, the second stage size reduction step may comprise subjecting the product of the first size reduction step to further fine grinding.

Optionally, when the partially hydrolysed collagen produced is partially hydrolysed bovine collagen, the partially hydrolysed bovine collagen comprises less than 1 wt.% fat (dry matter basis) and at least 95 wt.% protein (dry matter basis; as determined by the 7Vx5.52 method).

Optionally, when the partially hydrolysed collagen produced is partially hydrolysed bovine collagen, the partially hydrolysed bovine collagen has a molecular mass of between 150 kDa and 60 kDa.

Optionally, the alkaline treatment is provided by applying an alkaline solution, such as sodium hydroxide or calcium hydroxide. Preferably calcium hydroxide is used. Optionally, the concentration of calcium hydroxide used is from 1 to 2 % and is preferably 2 %. The pH during the alkaline treatment can be at least 10, preferably at least 11, more preferably at least 12, but not greater than 12.5. The alkaline treatment may be for at least 10 seconds to 10 minutes, optionally 10 seconds to five minutes, optionally 10 seconds to a minute.

Optionally, when a bovine hide is used, the bovine hide is subjected to lime pre-treatment before the size reduction is performed. Optionally, conventional lime treatment methods may be used to achieve this. Optionally, if the bovine hide has been subjected to lime pre-treatment, the alkaline treatment is omitted.

Optionally, the oxidizing treatment is performed using as hydrogen peroxide or ozone. Preferably is the oxidizing agent hydrogen peroxide and is used at a concentration of about 300 to 2500 ppm. Optionally, oxidisation can be performed for several seconds to minutes. The oxidizing treatment is preferably applied together with the alkaline treatment, when the alkaline treatment is used.

Optionally, the neutralizing step is performed to achieve a pH of between pH 5-7 and is carried out at between several seconds to one minute. Optionally, the acids for neutralizing the hide or skin include lactic acid, hydrochloric acid, carbon dioxide, acetic acid, ethylene diamine tetraacetic acid, ammonium chloride, propionic acid, and fumaric acid. Carbon dioxide or acetic acid are preferably used.

Optionally the drying step is performed using any suitable dryer. Optionally, drying is performed for 2 minutes or less.

The inventors discovered that the partially hydrolysed collagen unexpectedly showed significant ability to solubilise in solution and react with the polyols in the foam mixture. The partially hydrolysed collagen provides a foaming capacity similar to those of conventional polyol foams, whilst providing a foam composition with a reduced petrochemical content. The partially hydrolysed collagen is capable of foaming when in contact with polyols but is soluble in solution and has sufficient gelatinous properties to create an emulsion.

Preferably, the partially hydrolysed collagen is bovine collagen.

Optionally, the partially hydrolysed collagen comprises one or more of type I collagen fibrils, type II collagen fibrils, type III collagen fibrils, type IV collagen fibrils and type V collagen fibrils. Suitably, the partially hydrolysed collagen comprises one or both of type I collagen fibrils and type III collagen fibrils.

Optionally, the density of the foam article, which is made from the foam composition, once it has been expanded and cured, is between 40kg/m³ and 110 kg/m³. Preferably, the density is between 45kg/m³ and 95kg/m³. Preferably, the density is between 55kg/m³ and 95kg/m³. Preferably, the density is between 65kg/m³ and 90kg/m³. Advantageously, the foam composition of the first or second aspects provides a foam of comparable density, compared with conventional polyol foams.

The foam composition further comprises an organic acid. Optionally, the acid used in the acidification step may be selected from citric acid, acetic acid, malic acid, formic acid, lactic acid, maleic acid or any suitable organic acid. Advantageously, the organic acid facilitates chemical bonding of the partially hydrolysed collagen to the polyols and/or cross-linking agents in the foam composition. Advantageously, the inclusion of an organic acid in the foam composition increases the volume by which the foam composition expands when heated relative to a foam composition without an organic acid. Advantageously, the inclusion of an organic acid in the foam composition alters the physical properties of the resulting foam article, increasing mechanical strength, density and flame-retardancy. Advantageously, the inclusion of organic acid in the foam composition results in a foam article which crystalises (an endothermic reaction) post-combustion rather than producing flames (an exothermic reaction).

Optionally, the concentration of the organic acid is between 0.5%w/w and 3%w/w. Preferably, the concentration of the organic acid is between 0.5%w/w and 2%w/w. Preferably, the concentration of the organic acid is between 0.5%w/w and 1%w/w. Preferably, the concentration of the organic acid is about 1%w/w.

Optionally, organic acid is citric acid. Optionally, the concentration of the citric acid is between 0.5%w/w and 3%w/w. Preferably, the concentration of the citric acid is between 0.5%w/w and 2%w/w. Preferably, the concentration of the citric acid is between 0.5%w/w and 1%w/w. Preferably, the concentration of the citric acid is about 1 %w/w.

Suitably the organic acid, which may be citric acid, is added to partially hydrolysed collagen as a dry powder. Suitably, the organic acid is added at a weight concentration of 1%w/w organic acid and 20% protein w/w of the total foam composition. The partially hydrolysed collagen and acid are subsequently dissolved in the one or more polyols. Suitably, in embodiments, the organic acid, which may be citric acid, can be dissolved in a polyol first, before the partially hydrolysed collagen is added. Suitably, sufficient citric acid is added to adjust the pH of the foam composition to between pH 3 - 5. Without wishing to be bound by theory, it is considered the acid is catalysing the solubility and cross-linking of the partially hydrolysed collagen.

Optionally, the foam composition further comprises graphite. Preferably, the composition comprises 4%w/w to 10%w/w graphite. Advantageously, the graphite provides improved flame-retardant properties for the foam composition.

Optionally, the foam composition further comprises titanium. Suitably, the composition comprises 1%w/w to 10%w/w titanium. Advantageously, the titanium provides improved flame-retardant properties for the foam composition.

Optionally, the foam composition further comprises basalt. Suitably, the composition comprises 1%w/w to 10%w/w basalt. Advantageously, the basalt provides improved flame-retardant properties for the foam composition.

Optionally, the composition can further comprise an additional blowing agent. The blowing agent may comprise any suitable substance which is capable of producing a cellular structure via a foaming process in a variety of materials that undergo hardening or phase transition. The concentration of the blowing agent may be any suitable concentration required to obtain a foam volume suitable for the user's requirements. Preferably, the blowing agent is water.

Advantageously, the foam composition of the first or second aspects can expand by approximately 28:1% v/v upon heating, which is similar to the expansion properties of conventional polyol foam compositions. Advantageously, the acidified partially hydrolysed collagen exhibits intumescent properties, enabling the foam to expand. This technical advantage is not seen in polyol foams with fillers, such a gelatine, or hydrolysed collagen which does not exhibit a Bloom gel score of between 300g and 600g, as measured according to the method defined in ISO9665. The inventors have discovered that adding both an organic acid and a partially hydrolysed collagen source to a polyol mixture causes chemical reaction between the polyols and the partially hydrolysed collagen, binding the components together to create a matrix. This allows the volume of the foam composition to expand by 28:1% v/v upon heating, which is similar to the expansion properties of conventional polyol foam compositions. This expansion would not be seen in foams using conventional fillers, as these do not have the intumescent properties of the partially hydrolysed collagen.

Advantageously, the inventors have determined that the use of an organic acid promotes the chemical reaction between the partially hydrolysed collagen source and the polyol in the foam composition.

According to a third aspect of the invention, there is provided a method of manufacturing a foam article, the method comprising:
i. combining an organic acid and a partially hydrolysed collagen source;
ii. combining the mixture of step (i) with one or more polyols;
iii. Mixing the mixture of step (ii)
iv. Adding a cross-linking agent to the mixture of step (iii);
v. Applying the mixture from step (iv) to a mould;
vi. Heating the mould to between 25°C; and 50°C; and
vii. Cooling the mould to enable curing of the mixture from step (iv).

Optionally, in step (i), the organic acid acidifies the mixture to a pH between 3 and 5. Preferably, the pH is between 3.5 and 4.5. Preferably, the pH is about pH 4.

Optionally, the organic acid may be selected from citric acid, acetic acid, malic acid, formic acid, lactic acid, maleic acid or any suitable organic acid or any suitable dilute organic acid. Optionally, the concentration of the organic acid is between 0.5%w/w and 3%w/w of the total foam composition. Preferably, the concentration of the organic acid is between 0.5%w/w and 2%w/w of the total foam composition. Preferably, the concentration of the organic acid is between 0.5%w/w and 1%w/w of the total foam composition. Preferably, the concentration of the organic acid is about 1%w/w of the total foam composition.

Optionally, the concentration of the organic acid used is sufficient to maintain the pH of the foam composition between pH 3 and pH 5 during mixing of the organic acid and the partially hydrolysed collagen.

Preferably, the acid is citric acid. Preferably, the weight concentration of the citric acid is between 0.5%w/w and 3%w/w of the total foam composition. Preferably, the concentration of the citric acid is between 0.5%w/w and 2%w/w of the total foam composition. Preferably, the concentration of the citric acid is between 0.5%w/w and 1%w/w of the total foam composition. Preferably, the concentration of the citric acid is about 1%w/w of the total foam composition.

Optionally, the acidification of the mixture is performed for between 3 and 30 minutes.

Optionally, the acidification of the mixture is performed at between 18°C and 24°C.

Optionally, the mixture of step (iii) is mixed at between 10 and 120 cycles per minute. Preferably, the mixture of step (iii) is mixed at between 20 and 80 cycles per minute. Preferably, the mixture of step (iii) is mixed at between 40 and 60 cycles per minute. Preferably, the mixture of step (iii) is mixed at about 60 cycles per minute.

Optionally, in step (iii) the mixture of step (ii) is mixed for between 10 minutes and 240 minutes. Preferably, in step (iii) the mixture of step (ii) is mixed for between 30 and 120 minutes. Preferably, in step (iii) the mixture of step (ii) is mixed for between 45 and 90 minutes. Preferably, in step (iii) the mixture of step (ii) is mixed for about 60 minutes.

Optionally, the method comprises adding an additional blowing agent to the mould at step (vi). The blowing agent may comprise any suitable substance which is capable of producing a cellular structure via a foaming process in a variety of materials that undergo hardening or phase transition. The volume of the blowing agent may be any suitable volume required to obtain a foam volume suitable for the user's requirements. Preferably, the blowing agent is water.

Optionally, the method comprises heating the mould at step (vi) to between 30 and 50°C. Optionally, the method comprises heating the mould at step (vi) to between 45 and 55°C. Advantageously, heating the mould to this temperature range enables sufficient heating of the mixture to promote a biochemical reaction and the formation of the natural polymer. Advantageously, heating the mould to this temperature range provides sufficient heating to enable to biochemical reaction to occur, whilst also providing a more energy efficient process. Advantageously, the temperature range above is sufficient to promote binding of the partially hydrolysed collagen in the partially hydrolysed collagen with the cross-linking agent and polyol in the mixture, whilst preventing denaturation of the partially hydrolysed collagen.

Optionally, the method comprises heating the mould at step (vi) for between 2 minutes and 10 minutes. Preferably, the method comprises heating the mould at step (vi) for between 4 minutes and 6 minutes. Preferably, the method comprises heating the mould at step (vi) for 5 minutes. Advantageously, the above timing range provides sufficient heating time to promote a chemical reaction between the partially hydrolysed collagen and the cross-linking agent and polyol in the mixture, whilst providing a more energy efficient process.

Optionally, the method comprises heating the mould at step (vi) to a temperature which is sufficient to ensure that the temperature of the mixture in the mould at step (vi) does not exceed 70°C. Advantageously, this method promotes binding of the partially hydrolysed collagen in the partially hydrolysed collagen with the isocyanate and polyol in the mixture, whilst preventing denaturation of the partially hydrolysed collagen.

Advantageously, the method of the third aspect causes the collagen and polyol to expand by 28:1% v/v, which is similar to the expansion properties of conventional polyol foam compositions. Advantageously, the method of the third aspect provides a foam composition with equivalent foaming properties to that of conventional polyol films, whilst providing a foam composition with a reduced petrochemical content.

Optionally, the partially hydrolysed collagen in step (i) may be bovine collagen.

Optionally, the partially hydrolysed collagen in step (i) may obtained using the method described in WO2011/149356, which is incorporated herein by reference, and detailed in the first and second aspects of the invention.

The partially hydrolysed collagen unexpectedly showed significant ability to react with the polyols in the foam mixture, creating a natural polymer. The partially hydrolysed collagen provides a foaming capacity similar to those of conventional polyol foams, whilst providing a foam composition with a reduced petrochemical content.

Optionally, the mixture of step (i) may comprise one or more polyols with a functionality between 1.0 and 8.0. Optionally, the mixture of step (i) may comprise one or more polyols with a functionality between 1.8 and 3.0. Optionally, the mixture of step (ii) may comprise one or more polyols with a functionality between 2.0 and 3.0.

Optionally, the total foam composition may comprise one or more polyols with a weight concentration of between 30%w/w to 60%w/w. Preferably, the total foam composition may comprise one or more polyols with a weight concentration of between 40%w/w to 60%w/w. Preferably, the total foam composition may comprise one or more polyols with a weight concentration of between 40 to 50%w/w. Preferably, the total foam composition may comprise one or more polyols with a weight concentration of about 50%w/w.

Optionally, the total foam composition may comprise one or more polyols, wherein the one or more polyols are selected from a polyester polyol, a polyether polyol, a polycarbonate polyol and an acrylic polyol. Preferably, the one or more polyols are selected from the polyurethane class. Preferably, the one or more polyols are selected from a polyester polyurethane and a polyether polyurethane. Preferably the foam composition comprises a polyether polyurethane.

Optionally, the total foam composition may comprise a polyether polyol with a weight concentration of between 30%w/w to 60%w/w. Preferably, the total foam composition may comprise a polyether polyol with a weight concentration of between 40%w/w to 60%w/w. Preferably, the total foam composition may comprise a polyether polyol with a weight concentration of between 40%w/w to 50%w/w. Preferably, the total foam composition may comprise a polyether polyol with a weight concentration of about 50%w/w.

Optionally, the foam composition may comprise two or more polyols. Advantageously, the provision of two or more polyols provides a foam composition with properties which can be further customised to the user's requirements. Advantageously, the blend of two or more polyols can provide for a polyol mixture with varying molecular weights and functionalities. Advantageously, the blend of two or more polyols provides a foam composition which can be further altered to meet the desired density, resilience, fire retardant properties and thermal insulation properties.

Optionally, the total foam composition may comprise between 15% w/w and 50% w/w partially hydrolysed collagen. More preferably, the total foam composition may comprise between 20%w/w and 50%w/w partially hydrolysed collagen. More preferably, the total foam composition may comprise between 20%w/w and 45%w/w partially hydrolysed collagen. More preferably, the total foam composition may comprise between 20%w/w and 40%w/w partially hydrolysed collagen. More preferably, the total foam composition may comprise between 20%w/w and 35%w/w partially hydrolysed collagen. More preferably, the total foam composition may comprise between 20%w/w and 30%w/w partially hydrolysed collagen. More preferably, the total foam composition may comprise about 20%w/w partially hydrolysed collagen.

Optionally, the total foam composition may comprise between 15 and 50% w/w partially hydrolysed bovine collagen. More preferably, the total foam composition may comprise between 20%w/w and 50%w/w partially hydrolysed bovine collagen. More preferably, the total foam composition may comprise between 20%w/w and 45%w/w partially hydrolysed bovine collagen. More preferably, the total foam composition may comprise between 20%w/w and 40%w/w partially hydrolysed bovine collagen. More preferably, the total foam composition may comprise between 20%w/w and 35%w/w partially hydrolysed bovine collagen. More preferably, the total foam composition may comprise between 20%w/w and 30%w/w partially hydrolysed bovine collagen. More preferably, the total foam composition may comprise about 20%w/w partially hydrolysed bovine collagen.

Optionally, the total foam composition may comprise between 15 and 50% w/w partially hydrolysed ovine collagen. More preferably, the total foam composition may comprise between 20%w/w and 50%w/w partially hydrolysed ovine collagen. More preferably, the total foam composition may comprise between 20%w/w and 45%w/w partially hydrolysed ovine collagen. More preferably, the total foam composition may comprise between 20%w/w and 40%w/w partially hydrolysed ovine collagen. More preferably, total foam composition may comprise between 20%w/w and 35%w/w partially hydrolysed ovine collagen. More preferably, the total foam composition may comprise between 20%w/w and 30%w/w partially hydrolysed ovine collagen. More preferably, the total foam composition may comprise about 20%w/w partially hydrolysed ovine collagen.

Optionally, the total foam composition may comprise 15%w/w to 40%%w/w crosslinking agent. Preferably, the total foam composition comprises 20%w/w to 40%%w/w cross-linking agent. Preferably, the total foam composition comprises 20%w/w to 40%%w/w isocyanate. Preferably, the foam composition comprises about 30%w/w cross-linking agent.

Optionally, the total foam composition may comprise 15%w/w to 40%%w/w isocyanate. Preferably, the total foam composition comprises 20%w/w to 40%%w/w isocyanate. Preferably, the total foam composition comprises 20%w/w to 40%%w/w isocyanate. Preferably, the total foam composition comprises about 30%w/w isocyanate.

Optionally, the method may further comprises adding a flame-retardant material to the mixture at step (iii). Preferably, the flame-retardant material may be selected from one or more of graphite, titanium and basalt. Preferably, the total foam composition comprises 4 to 10%w/w graphite. Advantageously, the graphite provides improved flame-retardant properties for the foam composition.

Features of the third aspect may be combined with features of the first aspect of the invention. Features of the third aspect may be combined with features of the second aspect of the invention.

According to a fourth aspect of the present invention a foam article is provided. The foam article is manufactured using the method of the third aspect, using the foam composition of the first aspect or second aspect. Optionally, the foam article may be a cushion. Optionally the foam article may be for use in a seat. Optionally the foam article may be for use as a base cushion in a seat. Optionally, the foam article may be for use as back cushion in a seat. Optionally, the foam article may be for use as a mattress. Optionally, the foam article may be for use as part of a mattress. Optionally, the foam article may be for use as a pillow. Optionally, the foam article may be for use as part of a pillow.

Elements of the fourth aspect of the present invention may be combined with elements of the first, second and third aspects of the present invention.

According to a fifth aspect of the present invention, there is provided a seat which comprises a foam article of the fourth aspect. Suitably it may be manufactured using the method of the third aspect from the foam composition of the first or second aspects.

Elements of the fifth aspect of the present invention may be combined with elements of the first, second, third and fourth aspects of the present invention.

According to a sixth aspect of the present invention, there is provided a mattress which comprises a foam article of the fourth aspect. Suitably, the foam article may be manufactured using the method of the third aspect from the foam composition of the first or second aspects of the present invention.

Elements of the sixth aspect of the present invention may be combined with elements of the first, second, third, fourth and fifth aspects of the present invention.

According to a seventh aspect of the present invention, there is provided a kit comprising the foam composition of the first or second aspects and a mould. The mould may be any suitable mould for the user's requirements. The mould may be an injection mould. The mould may be suitably shaped to produce a base cushion for a chair or a mattress. The mould may be suitably shaped to produce a back cushion for a chair. A foam article of the fourth aspect may be manufactured using the method of the third aspect using the kit of the seventh aspect.

Elements of the seventh aspect of the present invention may be combined with elements of the first, second, third, fourth, fifth and sixth aspects of the present invention.

As used herein, the articles "a" and "an" refer to one or more than one (for example at least one) of the grammatical object of the article.

"About" shall generally mean an acceptable degree of error for the quantity measured given the nature or precision of the measurements.

Throughout the specification, unless the context demands otherwise, the terms 'comprise', 'include', or variations such as 'comprises' or 'comprising', 'includes' or 'including' will be understood to imply the includes of a stated integer or group of integers, but not the exclusion of any other integer or groups of integers.

Collagen refers to the structural proteins found in the extracellular matrix of connective tissue. Collagen has a molecular weight of about 300kDa and is a combination of three polypeptide strands of the triple helix, wherein each strand is coiled into helical structure. Collagen comprises of a large number of fibres which, in turn, further comprise of a much greater number of fibrils of sub-microscopic size. The fibrils have a diameter in the order of 1-5 nm and lengths ranging from several hundreds to hundred thousands of nm. The term can refer to fibrillar and non-fibrillar types of collagen. The term can refer to one or more of Type I, Type II, Type III, Type IV, Type V, Type VI, Type VII, Type VIII, Type IX, Type X, Type XI, Type XII, Type XIII, Type XIV, Type XV, Type XVI, Type XVII, Type XVII, Type XVIII, Type XIX, Type XX, Type XXI, Type XXII, Type XXIII, Type XXIV, Type XXV, Type XXVI, Type XXVII and Type XXVIII.

A polyol refers to an organic molecule comprising one or more hydroxyl (OH) groups. The term includes both polyester polyols, polyether polyols, polycarbonate polyols and acrylic polyols.

A polyol foam refers to any foam composition comprising one or more polyols. The polyol foam comprises polyols with a functionality between 1.0 and 8.0. Polyol foam may comprise a polyester polyol and/or a polyether polyol.

Foam composition refers to a dispersion of gas particles in a continuous liquid. The composition can be heated and cured to produce a solid foam article.

Foam article refers to a solid foam composed of solid matrix with small bubbles dispersed in the solid matrix. A foam article can be made from a foam composition which has been heat treated and cured.

Preferred features and embodiments of each aspect of the invention are as for each of the other aspects mutatis mutandis unless context demands otherwise.

### Brief Description of the Drawings

Embodiments of the present invention will now be described with reference to the accompanying figures by way of example only, in which:

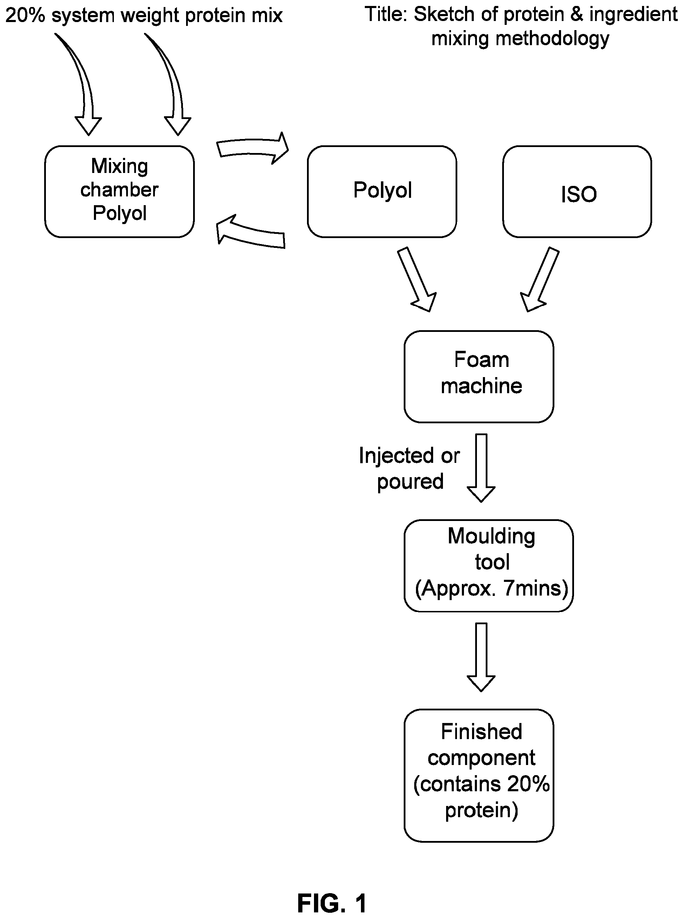

Figure 1 demonstrates a schematic diagram of an exemplary manufacture process of the third aspect of the invention. In this exemplary method, a partially hydrolysed collagen source and organic acid (termed protein mix) is combined with a polyol. The concentration of the partially hydrolysed collagen in the composition is 20%w/w. The resulting composition is added to a foam machine for mixing. After mixing, the composition is combined with an isocyanate cross-linker (ISO), before being injected into a foam moulding tool. The composition is heated for approximately seven minutes, so as to allow foam expansion. The mould is heated between 25°C and 50°C. Once the composition is cured, the resulting foam article is removed from the mould.

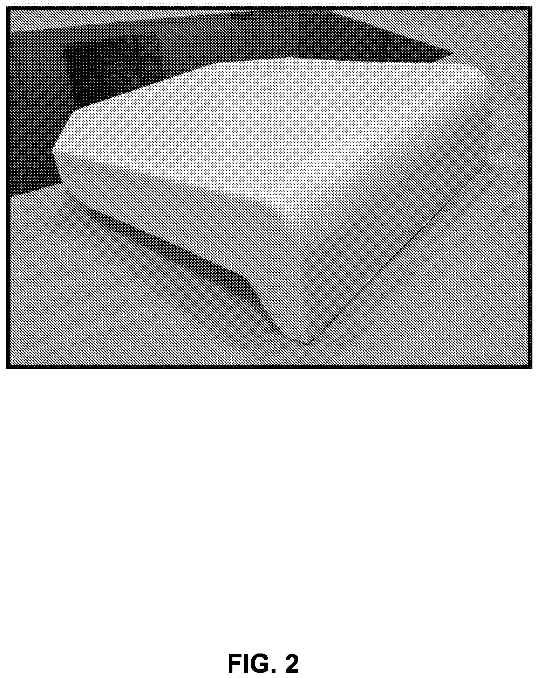

Figure 2 demonstrates a foam article of the fourth aspect made from the foam composition of the first or second aspects, using the method of the third aspect. The foam is made from the composition described in Table 2 and Example 1.
Figure 3 depicts images from the manufacture process according to the third aspect of the invention. Figure 3A depicts a foam mixing machine with polyester polyurethane. Figure 3B depicts the addition of partially hydrolysed bovine collagen. Figure 3C depicts the mixing process of the foam composition. Isocyanate is added to the mixture as the foam composition is mixed.

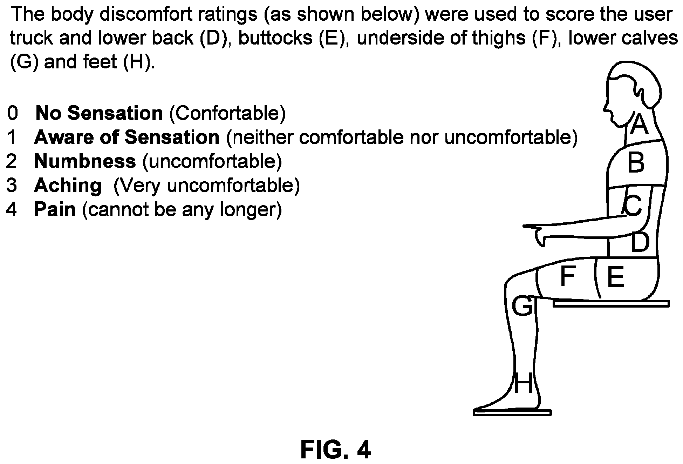

Figure 4 demonstrates body areas tested in the Seat Pad Hardness test disclosed in Example 4. The test was used to compare the foam article of the f aspect with conventional polyol foam articles. The Seat Pad Hardness test was used to test comfort and pressure distribution of the different foam articles. The methodology for the test is described in BS EN ISO 2439:2008.

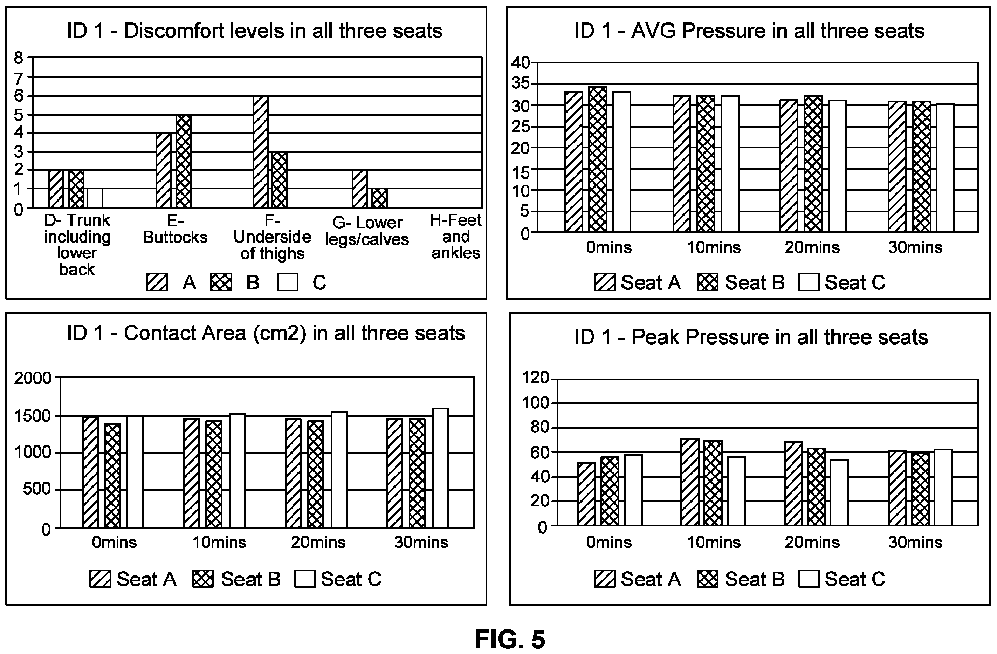

Figure 5 demonstrates the results subjective feedback of the Seat Pad Hardness test for user ID1 (as detailed in Example 4), i.e., an individual of medium stature and medium build. Seats A and B are standard foam articles made from conventional polyol foams. Seat C represents a foam article made with 20%w/w partially hydrolysed bovine collagen (as detailed in Table 2 of Example 1).

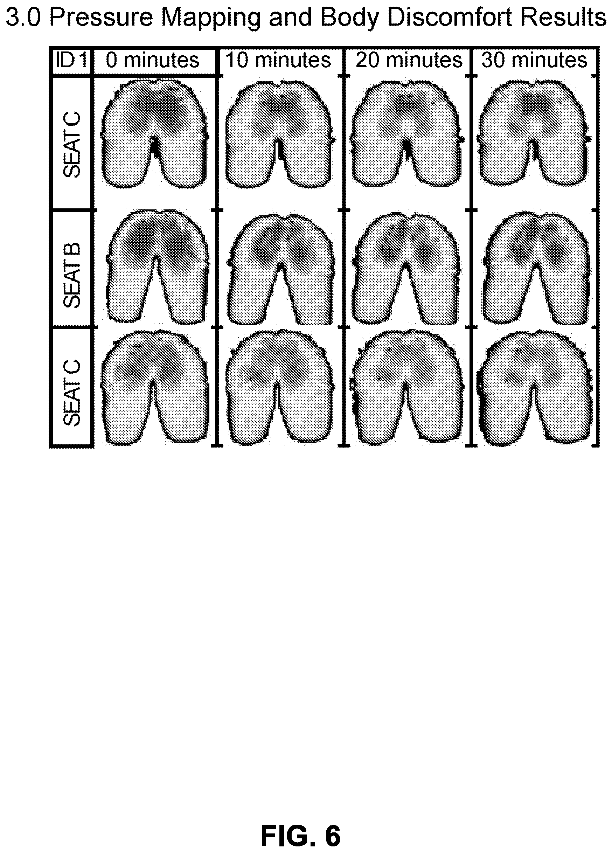

Figure 6 demonstrates the pressure mapping for user ID1 (as detailed in Figure 5B), i.e., an individual of medium stature and medium build. Seats A and B are standard foam articles made from conventional polyol foams. Seat C represents a foam article made with 20%w/w partially hydrolysed bovine collagen (as detailed in Table 2 of Example 1).

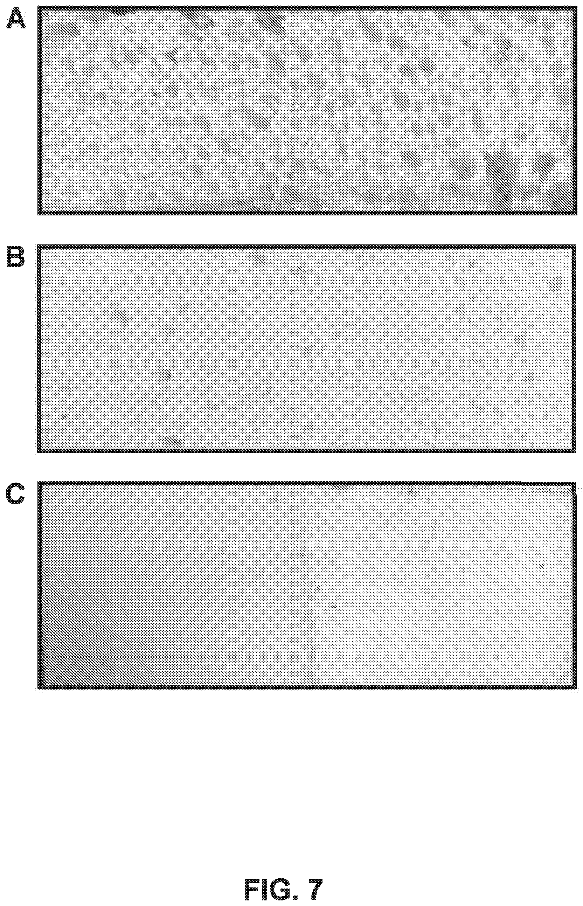

Figure 7 shows a cross section cut of foam articles made using varying compositions. Figure 7A demonstrates the consistency of a foam article made from a composition comprising 40%w/w partially hydrolysed bovine collagen, as detailed in Table 12 (foam composition Z). The foam composition did not include an organic acid. Figure 7B demonstrates the consistency of a foam article made from a composition comprising 20%w/w partially hydrolysed bovine collagen, as detailed in Table 11 (foam composition Y). The foam composition did not include an organic acid. Figure 7C demonstrates the consistency of a foam article made from a composition comprising 20%w/w partially hydrolysed bovine collagen and 1%w/w citric acid, as detailed in Table 10 (foam composition X).

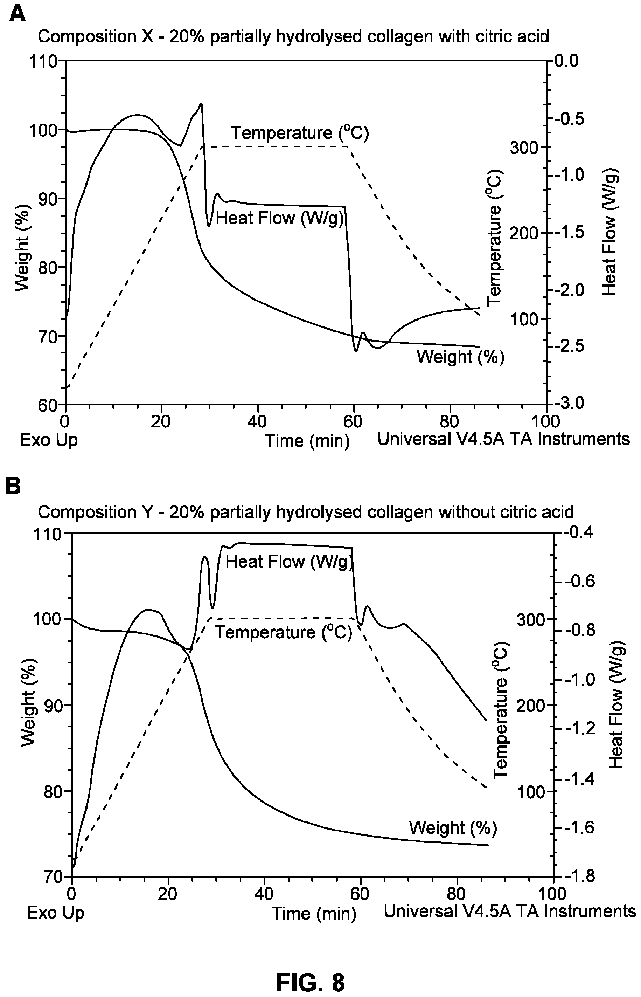

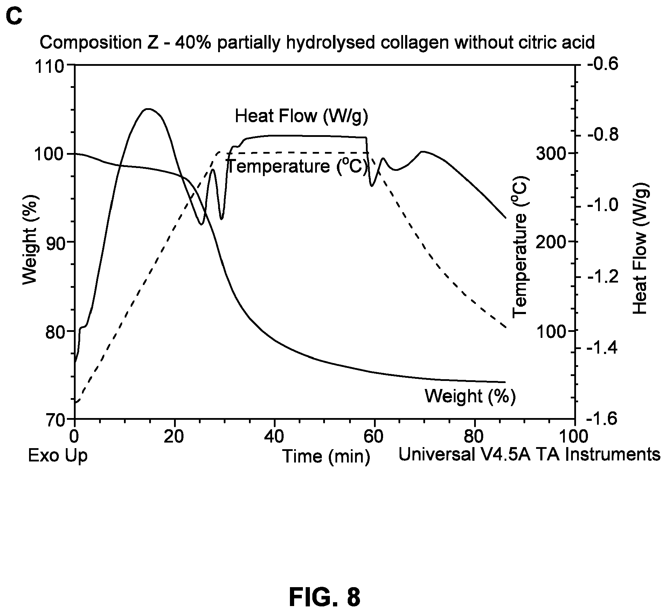

Figure 8 demonstrates the differential scanning calorimetry and thermal gravimetric analysis (DSC-TGA) of foam articles X (foam composition X; Table 10) (Fig. 8A), Y (foam composition Y; Table 11) (Fig. 8B) and Z (foam composition Z; Table 12) (Fig. 8C).

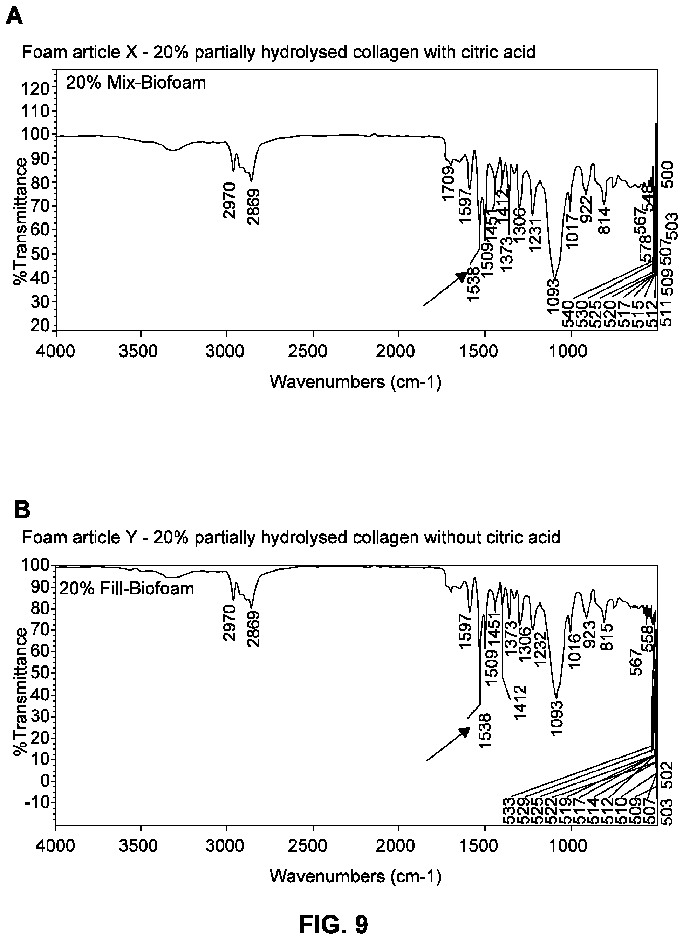

Figure 9 demonstrates the Fourier-transform infrared spectroscopy (FTIR) analysis of foam articles X (foam composition X; Table 10) and Y (foam composition Y; Table 11).

### Detailed Description

### Examples

### Example 1 - Manufacture of a 20%w/w bovine collagen foam article.

A foam seat article was manufactured using the composition listed in Table 2 below. The foam article comprises 20%w/w hydrolysed bovine collagen.

**Table 2: A foam composition comprising 20% w/w hydrolysed bovine collagen.**

| **Component** | **%w/w** |
|---|---|
| Polyether Polyurethane | 49.5 |
| Partially Hydrolysed Bovine Collagen | 20 |
| Isocyanate | 29.5 |
| Citric Acid | 1.0 |

Bovine hides were subjected to lime treatment, using conventional processes known in the art. The resulting limed pelts were subjected to a method comprising the steps of: producing at a temperature of 50 °C or less a wet collagen product by subjecting a hide or skin to a size reduction step; an alkaline and/or an oxidizing treatment step; and a neutralizing step; followed by drying of said wet collagen product using a contact dryer, to obtain said collagen powder, more particularly comprising the steps of: producing at a temperature of 50 degrees C or less a wet collagen product by subjecting a hide or skin to a size reduction step; an alkaline and / or oxidizing treatment step; and a neutralising step; followed by drying of said wet collagen product for a time period of 2 minutes or less using a roller dryer to obtain collagen powder, as described in WO2011/149356. The partially hydrolysed bovine collagen obtained as a result of this process was used.

Using the % weight concentrations disclosed in Table 2, 20%w/w partially hydrolysed bovine collagen was mixed with 1%w/w citric acid and 49.5%w/w polyether polyurethane. The mixture was maintained at about pH 4 throughout the mixing process to allow the partially hydrolysed bovine collagen to be suitably acidified.

The mixture was mixed in a foam mixing machine for a total of 60 minutes at 60 cycles per minute. 29.5%w/w of isocyanate was then combined with the mixture.

The resulting mixture was injected into a mould. The mould was heated between 45°C for a period of 7 minutes.

The mixture was left to cure for a period of 5 minutes.

The process resulted in a cured foam article comprising 20%w/w hydrolysed bovine collagen, as seen in Figure 2.

Advantageously, the use of the partially hydrolysed bovine collagen resulted in a foam product with the same characteristics as a conventional polyol foam article. The homogenous texture of the product, as seen in Figure 2, demonstrates that the bovine collagen has successfully reacted with the polyether to create a polymer.

It is known in the art that when conventional fillers are used in foams, there are clear air bubbles which can be seen in the cured foam article. The conventional filler foams also exhibit differences in texture throughout the foam, where the polyol and filler have failed to emulsify. This results in a weaker, less durable foam.

In this instance, the inventors have developed a foam which equals the density and durability performance of conventional polyol foams, whilst reducing the petrochemical content of the foam.

### Example 2 - Manufacture of a 40%w/w bovine collagen foam article.

A foam seat article was manufactured using the composition listed in Table 3 below. The foam article comprises 40%w/w hydrolysed bovine collagen.

The foam article was manufactured as per the method described in Example 1 above.

**Table 3: A foam composition comprising 40% w/w hydrolysed bovine collagen.**

| **Component** | **%w/w** |
|---|---|
| Polyether Polyurethane | 39.5 |
| Partially Hydrolysed Bovine Collagen | 40 |
| Isocyanate | 19.5 |
| Citric Acid | 1 |

The process resulted in a cured foam article comprising 40%w/w hydrolysed bovine collagen.

### Example 3 - Manufacture of a 20%w/w partially hydrolysed bovine collagen with 6%w/w graphite.

A foam seat article was manufactured using the composition listed in Table 4 below. The foam article comprises 20%w/w hydrolysed bovine collagen. In addition, the foam article was supplemented with 6%w/w graphite.

**Table 4: A foam composition comprising 20% w/w partially hydrolysed bovine collagen and 6%w/w graphite.**

| **Component** | **%w/w** |
|---|---|
| Polyether Polyurethane | 46.5 |
| Partially Hydrolysed Bovine Collagen | 20 |
| Isocyanate | 26.5 |
| Graphite | 6 |
| Citric Acid | 1 |

The foam was made using the method of Example 1. In addition, 6%w/w graphite was introduced to the mixture at the same time as the isocyanate.

### Example 4 - Seat Pad Hardness Test

A foam article for a seat was made using the foam composition from Table 2 (Example 1). This foam article (termed Seat C) was tested, using the Seat Pad Hardness test, against two conventional polyol foam seats (termed Seats A and B, below), so as to test comfort and pressure distribution of the different foam articles.

The methodology for the test is described in BS EN ISO 2439:2008, as detailed below:
1. 500N is applied to the seat cushion using an Ø200mm indenter for 30 seconds to represent a small person weighing up to 50kg.
2. The seat cushion is then subjected to a force of 1100N using an Ø200mm indenter for 30 seconds to represent a large person weighing up to 110kg.

The percentage height loss in the seat cushion can then be used to determine the comfort levels for small and large people.

Results of the Seat Pad Hardness test for each seat are detailed in Table 5 below.

**Table 5: Results of the Seat Pad Hardness test for Seats A, B and C**

| | SEAT A (no partially hydrolysed collagen) | SEAT B (no partially hydrolysed collagen) | SEAT C (20% partially hydrolysed collagen - Table 2) |
|---|---|---|---|
| Initial Height (under 5N) | 82.2mm | 91.2mm | 86.6mm |
| Initial Hardness (40% Indentation) | 484.2N | 524.1N | 345.1N |
| Indentation % at 50kg (500N) | 33.86% | 25.8% | 41.6% |
| Indentation % at 110kg (1100N) | 52.9% | 56.8% | 67.1% |

Seat C (comprising 20%w/w partially hydrolysed bovine collagen and 1%w/w citric acid) demonstrated a higher percentage indentation at 500N and 1100N than conventional polyol foam Seats A and B, indicating a foam article with more comfort. In terms of Peak Pressure, Seat C showed lower levels of peak pressure over time, which may be due to its softness, as it envelops the users. This was particularly relevant to larger users. As detailed in Fig. 6, Seat C demonstrated the greatest contact area (cm²) over time as the seat is softer than Seats A and B and conforms to the body quicker. The results indicate that the foam composition comprising 20%w/w of partially hydrolysed bovine collagen results in a foam article which was comfier than the foam articles made from polyol foams. The results indicate that a foam article made from a foam composition comprising 20%w/w partially hydrolysed bovine collagen and 1%w/w citric acid can exceed the comfort of standard polyol foams, or meet the same standards, whilst also reducing the petrochemical content of the foam article.

### Example 5 - Comfort Assessment of seat cushion

The comfort of the seat articles in Example 4 were further tested using subjective assessments made by six users.

The build of each user is detailed in Table 6 below. The varying heights and weights of the users included a 10^{th} percentile female to a 98^{th} percentile male.

**Table 6: Body shape of each user in the seat cushion comfort assessment**

| Identifier | Build/Stature | User preference (from best to worst) |
|---|---|---|
| ID1 | Medium stature and medium build | C - A - B |
| ID2 | Tall stature and large build | A - C - B |
| ID3 | Tall stature and thin build | C - A - B |
| ID4 | Small stature and thin build | C - A - B |
| ID5 | Medium stature and thin build | C - A - B |
| ID6 | Small stature and large build | A - C - B |

The three seat cushions were tested by each user. Subjective feedback and pressure mapping data was collected to assess the body discomfort of each user.

For subjective feedback, the body discomfort ratings were used to score the user's trunk (D), buttocks (E), underside of thighs (F), lower calves (G) and feet (H). Each of these portions of the body is disclosed in Fig. 4.

The preferred seat rankings for each subject are detailed in Table 6.

As demonstrated above, Seat C (foam composition of Table 2) was elected as the preferred seat in 4 out of six cases (ID1, ID3, ID4 and ID5). The results confirm that Seat C is the preferred foam article for comfort, showing an advantage over conventional polyol foams. Even in cases where Seat A (the conventional polyol foam) was selected as the preferred foam article, Seat C was elected second, meaning that Seat C can at the very least be considered to meet the same standards of comfort compared to conventional polyol foam articles, whilst reducing the petrochemical content of the foam composition used.

Figure 5 further details the results for one individual in the test, who was of average height and build (ID1 of Table 6). The results indicate that the individual found Seat C to show lower levels of discomfort in the trunk, buttocks, underside of thighs and lower legs (top left graph). The results also indicate that seat shows comparative pressure to Seats A and B over a period of 30 minutes (top right graph), an increased contact area over a period of 30 minutes (bottom left graph) and comparative peak pressure over 30 minutes (bottom right graph). The results re-iterate the findings that the foam composition comprising 20%w/w of partially hydrolysed bovine collagen results in a foam article which was comfier than the foam articles made from polyol foams, whilst also reducing the petrochemical content of the foam composition.

Regarding the pressure mapping, Figure 6 demonstrates that Seat C showed the lowest pressure over all time points.

### Example 6 - Physical properties and flammability characteristics of partially hydrolysed bovine collagen foam.

A foam article was made according to the method of Example 3 and using the foam composition as detailed in Table 4. The foam article was made from a foam composition comprising 20%w/w partially hydrolysed bovine collagen, 1%w/w citric acid and 6% w/w graphite. The combination of these features provide a foam article with improved fire retardancy.

The characteristics of the foam article were tested using the methods described in the BS4443 series and BS EN ISO 845:1995.

Table 7 demonstrates the physical properties, classification and flammability characteristics of the foam article made using the composition of Table 4. The physical properties of the foam article were measured using the test methods described in BS4443 series and BS EN ISO 845:1995.

As detailed in the table below, the characteristics of the partially hydrolysed bovine collagen foam article were similar to the metrics achieved by standard polyol foams used in the industry. The advantage of the foam article made from a foam composition comprising hydrolysed bovine collagen is that the composition reduces the requirement for petrochemicals, replacing these with a sustainable material.

**Table 7: Physical properties of a foam article comprising 20%w/w partially hydrolysed bovine collagen, 1%w/w citric acid and 6%w/w graphite.**

| Physical Property | Measurement achieved for foam article manufactured from the foam composition of Table 4. |
|---|---|
| Piece density range | 82-87kg/m³ |
| Hardness range | 70-100N |
| CLD Hardness (40%) | 1.9-3.0 kPa |
| Tensile Strength | 60 kPa min |
| Elongation at break | 100% min |

The flammability characteristics of the of the foam were then tested using the industry standard smoke and toxicity test (ATS-1000/ABD 0031), the vertical burn test (FAR 25.853a) and the kerosene burn test (FAR 25.853c). The results of these tests demonstrated that the foam composition met the requirements for a maximum weight loss of 10%, the requisite flammability standard required for use in the aviation industry.

The results indicate that a foam article made from a foam composition comprising a combination of partially hydrolysed bovine collagen and citric acid is capable of meeting the same flammability requirements of conventional polyol foam articles, whilst reducing the petrochemical content of the foam.

The fatigue class of the foam article was also tested. The fatigue class of the foam article, as defined in BS 3379:2005 was measured using a calibrated pounding machine (according to the method detailed in BS EN ISO 3385:1995). As detailed in Table 8, three replicate foam articles made from foam compositions detailed in Table 4 (using the method detailed in Example 3) were subjected to 240,000 cycles in the calibrated pounding machine. The test was carried out over a period of 16 hours.

**Table 8: Fatigue class by constant load pounding, as detailed by BS EN ISO 3385:1995**

| | 1 | 2 | 3 |
|---|---|---|---|
| Thickness (mm) | 48.6 | 48.4 | 47.9 |
| Indentation Hardness Index (N) (According to BS EN ISO 2439) | 320 | 320 | 315 |
| Hardness grade | 330 | 330 | 330 |
| Thickness after Pounding (mm) | 48 | 48.3 | 47.9 |
| Hardness after Pounding (N) | 300 | 300 | 295 |
| Thickness Loss (mm) (%) | 0.6 | 0.1 | 0 |
| | 1.2 | 0.2 | 0 |
| Hardness Loss (N) (%) | 20 | 20 | 20 |
| | 6 | 6 | 6 |
| Fatigue Class | Extremely Severe | Extremely Severe | Extremely Severe |

As detailed in Table 8, the replicate foam articles lost 6% hardness (NI) and between 0 and 1.2% thickness (mm). The replicates all met the criteria for extremely severe foam class (as defined by the criteria detailed in BS 3379:2005). This class is defined as suitable for use in heavy duty contract seats and heavy-duty public transport seats.

The results indicate that a foam composition comprising partially hydrolysed bovine collagen and citric acid can be used to make a foam article capable of meeting the physical durability requirements of conventional polyol foams, whilst reducing the petrochemical content of the foam composition.

Overall, the inventors have discovered that the use of a foam composition comprising partially hydrolysed collagen and organic acid is suitable for manufacturing foam articles which meet and exceed the metrics of conventional polyol foam articles known in the art.

### Example 6 - Comparison of physical characteristics of foam articles made from compositions with and without citric acid.

Bovine hides were subjected to lime treatment, using conventional processes known in the art. The resulting limed pelts were subjected to the method described in WO2011/149356. The partially hydrolysed bovine collagen obtained as a result of this process was used.

Foam compositions X, Y and Z were mixed as according to the compositions as detailed in Tables 9, 10 and 11 below, respectively.

**Table 9: Foam Composition X - foam composition comprising 20% w/w hydrolysed bovine collagen and citric acid.**

| **Component** | **%w/w** |
|---|---|
| Polyether Polyurethane | 49.5 |
| Partially Hydrolysed Bovine Collagen | 20 |
| Isocyanate | 29.5 |
| Citric Acid | 1.0 |

**Table 10: Foam Composition Y - comprising 20% w/w hydrolysed bovine collagen without citric acid.**

| **Component** | **%w/w** |
|---|---|
| Polyether Polyurethane | 50 |
| Partially Hydrolysed Bovine Collagen | 20 |
| Isocyanate | 30 |

**Table 11: Foam Composition Z - foam composition comprising 40% w/w hydrolysed bovine collagen without citric acid.**

| **Component** | **%w/w** |
|---|---|
| Polyether Polyurethane | 40 |
| Partially Hydrolysed Bovine Collagen | 40 |
| Isocyanate | 20 |

Firstly, the polyol, partially hydrolysed bovine collagen were combined. For Foam Composition X (detailed in Table 9), the citric acid was combined with the partially hydrolysed bovine collagen prior to mixing with the polyol solution. The subsequent composition was mixed.

The mixture in Table 9 was maintained at about pH 4 throughout the subsequent mixing process, so as to allow the partially hydrolysed bovine collagen to be suitably acidified.

The compositions in Table 10 and Table 11 were maintained at about pH 7 throughout the subsequent mixing process.

The mixtures were mixed in a foam mixing machine for a total of 60 minutes at 60 cycles per minute. The isocyanate was then combined with the mixture.

The resulting mixtures was injected into a mould. The mould was heated between 45°C for a period of 7 minutes.

The mixtures were left to cure for a period of 5 minutes.

The cured foam articles were then compared to measure the characteristics.

A cross-sectional view of the cured foam articles is detailed in Figure 7. Figure 7A demonstrates a cross-section of the cured Foam Article Z, derived from Foam Composition Z (i.e., 40% w/w partially hydrolysed bovine collagen without citric acid). As seen in the picture, larger air bubbles can be seen in the foam. The foam article of Figure 7B represents Foam Article Y, made from Composition Y (a composition comprising 20% w/w partially hydrolysed collagen without citric acid). Whilst the air bubbles are smaller than in Figure 7A, air bubbles are still present. Finally, Figure 7C demonstrates Foam Article X, made from Foam Composition X (a composition comprising 20% w/w partially hydrolysed collagen with citric acid). The inclusion of citric acid in the mixture results in a dense foam article with no visible air bubbles. The combination of partially hydrolysed collagen and citric acid results in a dense foam article with an improved density.

### Example 7 - Comparison of flame-retardant properties of foam articles made from compositions with and without citric acid.

Foam Articles X, Y and Z were made using Foam Compositions X, Y and Z, respectively (as described in Example 6). The foam articles were subjected to a cone calorimeter test, so as to measure flammability. The foam articles were placed in a cone-shaped radiant heater and subjected to pyrolysis. The combustion produced from each article was captured in the cone heater and the measurements recorded. The test was performed according to the method and standards detailed in ISO 5660-1.

The properties of each foam article, the apparatus specifications and test conditions are detailed in Table 12 below.

**Table 12: Test and sample parameters for Foam Articles X, Y and Z.**

| **Specimen information** | | | |
|---|---|---|---|
| | **Foam Article X (20% w/w partially hydrolysed collagen with citric acid)** | **Foam Article Y (20% w/w partially hydrolysed collagen without citric acid)** | **Foam Article Z (40% w/w partially hydrolysed collagen without citric acid)** |
| E | 13.1 MJ/kg | 13.1 MJ/kg | 13.1 MJ/kg |
| Thickness | 40 mm | 40 mm | 40 mm |
| Initial mass | 33.48 g | 30.72 g | 32.38 g |
| Surface area | 88.4 cm² | 88.4 cm² | 88.4 cm² |
| Heat flux | 25 kW/m² | 25 kW/m² | 25 kW/m² |
| Separation | 25 mm | 25 mm | 25 mm |
| Orientation | Horizontal | Horizontal | Horizontal |
| Nominal duct flow rate | 24 l/s | 24 l/s | 24 l/s |
| Edge frame used? | Yes | Yes | Yes |
| Grid used? | Yes | Yes | Yes |
| Conditioned? | Yes | Yes | No |
| Temperature | 23°C | 23°C | N/A |
| RH | 50% | 50% | N/A |

| **Apparatus Specifications** | | | |
|---|---|---|---|
| C-factor | 0.04224 | 0.04224 | 0.04224 |
| Duct diameter | 0.114 m | 0.114 m | 0.114 m |
| O2 delay time | 15 s | 15 s | 15 s |
| CO2 delay time | 15 s | 15 s | 15 s |
| CO delay time | 15 s | 15 s | 15 s |
| OD corr. factor | 1 | 1 | 1 |

| **Pre-test Conditions** | | | |
|---|---|---|---|
| Ambient temperature | 20°C | 20°C | 20°C |
| Ambient pressure | 101.17 kPa | 101.153 kPa | 101.151 kPa |
| Relative humidity | 50% | 50% | 50% |

| **Test conditions** | | | |
|---|---|---|---|
| Baseline ambient oxygen | 20.71% | 20.71% | 20.71% |
| Baseline oxygen | 20.95% | 20.95% | 20.95% |
| Baseline carbon dioxide | 0.06% | 0.06% | 0.06% |
| Mass at sustained flaming | 33.6 g | 30.5 g | 32.1 g |
| Time to 70% mass loss | 255 s | 350 s | 310 s |

| **Test times** | | | |
|---|---|---|---|
| Time to ignition | 61 s | 43 s | 58 s |
| Time to flameout | 274 s | 558 s | 495 s |
| End of test criterion | User entered | ISO 5660-1:2002 | ISO 5660-1:2002 |
| End of test time | 500 s | 685 s | 695 s |

The results for Foam Articles X (foam composition comprising 20% w/w partially hydrolysed bovine collagen and 1% w/w citric acid), Y (foam composition comprising 20% w/w partially hydrolysed bovine collagen without citric acid) and Z (foam composition comprising 40% w/w partially hydrolysed bovine collagen without citric acid) are detailed in Tables 13 to 17 below.

**Table 13: Heat release and test results for Foam Article X, Y and Z.**

| **Heat Release Results** | **Foam Article X** | **Foam Article Y** | **Foam Article Z** |
|---|---|---|---|
| THR (0-300) | 8.05 MJ/m² | 41.92 MJ/m² | 50.76 MJ/m² |
| THR (0-600) | 10.07 MJ/m² | 78.89 MJ/m² | 83.48 MJ/m² |
| THR (0-1200) | 75.54 MJ/m² | - | - |
| Fuel load | 2.46 MJ/kg | 22.73 MJ/kg | 22.95 MJ/kg |

| | **Test results (between 61 and 500 s)** | **Test results (between 43 and 685 s)** | **Test results (between 58 and 695 s)** |
|---|---|---|---|
| Total heat release | 9.3 MJ/m² | 79.0 MJ/m² | 84.1 MJ/m² |
| Total oxygen consumed | 5.8 g | 49.3 g | 52.6 g |
| Mass lost | 5.3 g | 27.6 g | 29.0 g |
| Av. specific MLR (*ṁ*_{A,10-90}) | 1.38 g/(s·m²) | 7.47 g/(s·m²) | 9.54 g/(s·m²) |
| Total smoke release | 189.5 m²/m² | 769.9 m²/m² | 840.2 m²/m² |
| Total smoke production | 1.7 m² | 6.8 m² | 7.4 m² |
| MARHE | 44.1 kW/m² | 161.6 kW/m² | 188.7 kW/m² |

| | | | |
|---|---|---|---|
| (THR = Total Heat Release, MLR = Mass Loss Rate, MARHE = Maximum Average Rate of Heat Emission). | | | |

**Table 14: Mean and peak results for Foam Article X (between 61 seconds and 500 seconds), Foam Article Y (between 43 seconds and 685 seconds) and Foam Article Z (between 58 seconds and 695 seconds). The time at which the peak occurred for each metric is displayed in brackets after the peak measurement.**

| | **Mean** | | | **Peak (at time (s))** | | |
|---|---|---|---|---|---|---|
| | Foam Article X | Foam Article Y | Foam Article X | Foam Article X | Foam Article Y | Foam Article Z |
| Heat release rate (kW/m²) | 20.94 | 123.15 | 132.13 | 112.7 (75 secs) | 238.88 (345 secs) | 287.29 (255 secs) |
| Effective heat of comb. (MJ/kg) | 15.6 | 25.27 | 25.66 | 64.06 (90 secs) | 77.07 (490 secs) | 71.96 (170 secs) |
| Mass loss rate (g/s) | 0.012 | 0.043 | 0.045 | 0.061 (75 secs) | 0.107 (320 secs) | 0.13 (325 secs) |
| Specific extinction area (m²/kg) | 320.57 | 245.89 | 255.17 | 4394.3 (225 secs) | 4171.3 (565 secs) | 2265.7 (465 secs) |
| Carbon monoxide yield (kg/kg) | 0.0142 | 0.0199 | 0.0151 | 0.589 (465 secs) | 28.308 (565 secs) | 5.0199 (570 secs) |
| Carbon dioxide yield (kg/kg) | 0.89 | 1.46 | 1.51 | 17.27 (465 secs) | 17.19 (535 secs) | 25.89 (465 secs) |

**Table 15: Test averages for time points in cone calorimeter test for Foam Article X (between 61 seconds and 500 seconds) and Foam Article Y (between 43 seconds and 685 seconds) and Foam Article Z (between 58 seconds and 695 seconds).**

| **Test averages** | | | | | | | | | | | | |
|---|---|---|---|---|---|---|---|---|---|---|---|---|
| **from ignition to ignition plus...** | **1 min** | | | **2 min** | | | **3 min** | | | **4 min** | | |
| | **Foam Article X** | **Foam Article Y** | **Foam Article Z** | **Foam Article X** | **Foam Article Y** | **Foam Article Z** | **Foam Article X** | **Foam Article Y** | **Foam Article Z** | **Foam Article X** | **Foam Article Y** | **Foam Article Z** |
| Heat release rate (kW/m²) | 83.09 | 111.63 | 112.12 | 57.22 | 117.99 | 151.38 | 41.45 | 143.95 | 186.96 | 32 | 159.94 | 210.5 |
| Effective heat of comb. (MJ/kg) | 18.59 | 20.56 | 18.08 | 18.03 | 20.68 | 19.86 | 18 | 22.99 | 22.17 | 17.14 | 23.85 | 23.38 |
| Mass loss rate (g/s) | 0.039 | 0.048 | 0.055 | 0.028 | 0.051 | 0.067 | 0.02 | 0.056 | 0.074 | 0.017 | 0.06 | 0.079 |
| Specific extinction area (m²/kg) | 57.06 | 258.72 | 119.85 | 101.71 | 219.23 | 178.06 | 141.61 | 252.12 | 239.87 | 184.8 5 | 250.24 | 245.84 |
| Carbon monoxide yield (kg/kg) | 0.0117 | 0.0116 | 0.0079 | 0.0128 | 0.0126 | 0.0093 | 0.0131 | 0.0124 | 0.0107 | 0.013 4 | 0.0122 | 0.0108 |
| Carbon dioxide yield (kg/kg) | 1.14 | 1.25 | 1 | 1.09 | 1.26 | 1.14 | 1.06 | 1.37 | 1.3 | 1.01 | 1.41 | 1.38 |

| **Test averages (continued)** | **5 min** | | | **6 min** | | |
|---|---|---|---|---|---|---|
| **from ignition to ignition plus...** | **Foam Article X** | **Foam Article Y** | **Foam Article Z** | **Foam Article X** | **Foam Article Y** | **Foam Article Z** |
| Heat release rate (kW/m²) | 26.61 | 173.36 | 221.45 | 23.51 | 179.91 | 216.81 |
| Effective heat of comb. (MJ/kg) | 16.16 | 24.46 | 24.37 | 16.06 | 24.91 | 24.84 |
| Mass loss rate (g/s) | 0.015 | 0.063 | 0.08 | 0.013 | 0.064 | 0.077 |
| Specific extinction area (m²/kg) | 229.27 | 238.8 | 251.63 | 277.4 | 236.82 | 259.82 |
| Carbon monoxide yield (kg/kg) | 0.0136 | 0.0115 | 0.0109 | 0.0141 | 0.0112 | 0.011 |
| Carbon dioxide yield (kg/kg) | 0.96 | 1.44 | 1.45 | 0.94 | 1.46 | 1.49 |

**Table 16: Test averages over specified time periods for Foam Articles X, Y and Z.**

| **Test averages** | | | | | | |
|---|---|---|---|---|---|---|
| | Foam Article X | | Foam Article Y | | Foam Article Z | |
| **from ignition to ignition plus...** | **0s - 61s** | **61s-1215s** | **0 s - 43 s** | **43 s - 685 s** | **0s -58 s** | **58 s - 695 s** |
| Heat release rate (kW/m²) | 2.88 | 65.37 | 1.75 | 123.15 | 1.67 | 132.13 |
| Effective heat of comb. (MJ/kg) | -16.56 | 24.01 | 2.85 | 25.27 | 2.75 | 25.66 |
| Mass loss rate (g/s) | -0.003 | 0.024 | 0.009 | 0.043 | 0.006 | 0.045 |
| Specific extinction area (m²/kg) | 1658.22 | 244.30 | 561.06 | 245.89 | 605.95 | 255.17 |
| Carbon monoxide yield (kg/kg) | -0.0045 | 0.0133 | 0.0105 | 0.0199 | 0.0018 | 0.0151 |
| Carbon dioxide yield (kg/kg) | -0.44 | 1.36 | 0.11 | 1.46 | 0.02 | 1.51 |

**Table 17: Smoke release results for Foam Articles X, Y and Z.**

| **Smoke results** | Foam Article X | Foam Article Y | Foam Article Z |
|---|---|---|---|
| Total smoke release: nonflaming phase (0 s - 61 s) | 17.3 m²/m² | 13.8 m²/m² | 20.3 m²/m² |
| Total smoke release: flaming phase (61 s - 500 s) | 189.5 m²/m² | 769.9 m²/m² | 840.2 m²/m² |
| Total smoke release: whole test (0 s - 500 s) | 206.8 m²/m² | 783.7 m²/m² | 860.5 m²/m² |

The results indicate that Foam Article X (foam composition comprising 20% w/w partially hydrolysed bovine collagen and 1% w/w citric acid) was significantly less flammable than Foam Articles Y (foam composition comprising 20% w/w partially hydrolysed bovine collagen without citric acid) and Z (foam composition comprising 40% w/w partially hydrolysed bovine collagen without citric acid).

As disclosed in Table 12, foam articles are of identical size and surface area were tested. The initial mass of Foam Article X is greater than that of Foam Article Y, as the Foam Composition X produces a denser foam within the same mould than Foam Composition Y (discussed previously in Example 6).

Foam Article X took longer to ignite than Foam Article Y (61 seconds and 43 seconds, respectively). The time taken for the article to stop burning was also less than for Foam Article X (274 seconds versus 558 seconds) (Table 12).

As disclosed in Table 13, the total heat release (THR) of Foam Article X was lower than Foam Article Y at both 0-300 seconds and 0-600 seconds. Foam Article X released a total of 9.3 MJ/m² between 61 and 500 seconds after the test began. In contrast, Foam Article Y released a total of 79.0 MJ/m². Whilst Foam Article X only lost a total of 5.3g over the measured time period, Foam Article Y shows a mass loss of 27.6g. The mass lost by Foam Article X is approximately 10% of the total mass of the foam article; the maximum mass loss allowed for seat inserts in the aviation industry. This was not achieved by Foam Article Y, showing that the combination of partially hydrolysed collagen and organic acid is essential in the foam composition to produce a foam article with this level of fire-retardancy.

When comparing each foam article at specified time points after ignition, Foam Article X consistently demonstrates a lower heat release rate, mass loss rate, specific extinction area and carbon dioxide yield than Foam Article Y at all time points (Table 15).

Tables 16 and 17 further confirm that over the measured time periods, Foam Article X demonstrated lower measures of flammability than Foam Article Y.

The results confirm that a foam composition comprising both partially hydrolysed collagen and an organic acid source results in a foam article with significantly higher flame retardancy and less smoke release.

As exemplified by the results for Foam Article Z (comprising 40%w/w partially hydrolysed bovine collagen), increasing the concentration of partially hydrolysed bovine collagen in the foam composition does not improve the fire-resistant properties of the foam article, when in the absence of citric acid. Foam Article Z lost 29.0g (Table 13) and showed an average mass loss rate similar to that of Foam Article Y (Table 14). Similarly, total smoke release (Table 17) for Foam Articles Y and Z were equivalent (and both substantially higher than for Foam Article X). The results further confirm the importance of incorporating an organic acid into the foam composition, so as to alter the physical properties of the resulting foam article.

To further investigate this phenomenon, the inventors subjected Foam Articles X, Y and Z (Example 6) to parallel differential scanning calorimetry and thermal gravimetric analysis (DSC-TGA), so as to establish the thermal properties of each foam article. DSC-TGA analysis enables measurement of processes occurring in a material under different temperature conditions.

Thermal gravimetric analysis (TGA) determines the change in the sample mass as a function of temperature or time, under different gas atmosphere conditions.

Differential scanning calorimetry (DSC) analysis measures the enthalpy change of the foam articles during the heating process.

Figure 8A demonstrates the heat flow (W/g) of Foam Article X (20% w/w partially hydrolysed collagen with citric acid). As noted in the figure, as temperature increases over time, heat flow initially also increases. Notably, once temperature is maintained at 300°C (between 30 and 60 minutes), the heat flow of Foam Article X sharply decreases from approximately -0.375W/g to approximately -1.25W/g, where it is maintained whilst the temperature remains constant. This heat flow profile is consistent with an endothermic reaction. Instead of flaming when the temperature is raised to 300°C, the majority of the foam article crystalises, forming a char.

Figure 8B demonstrates the heat flow (W/g) of Foam Article Y (20% w/w partially hydrolysed collagen without citric acid). As noted in the figure, as temperature increases over time, heat flow also increases. Crucially, and in contrast to Foam Article X, when the temperature is maintained at 300°C (between 30 mins and 60 mins), the heat flow of Foam Article Y sharply increases to approximately -0.45W/g. The heat flow is maintained at this rate whilst the temperature is constant. This heat flow profile is consistent with an exothermic reaction.

The results of the DSC-TGA analysis demonstrate that the inclusion of organic acid in the foam composition alters the physical properties of the resulting foam articles. Specifically, the inclusion of an organic acid in the foam composition significantly improves the fire resistance of the foam article, causing the foam article to crystalise under heat (instead of burning), resulting in a char. The results further support that the foam composition of the present invention results in an improved flame-retardant foam article.

Figure 8C demonstrates the heat flow (W/g) of Foam Article Z (40% w/w partially hydrolysed collagen without citric acid). As detailed in the figure, a similar heat flow profile is seen as compared to Foam Article Y. When the temperature is maintained at 300°C (between 30 mins and 60 mins), the heat flow moderately rises to approximately -0.8W/g. The foam article also displays an exothermic reaction profile. The heat flow rate between 30 minutes and 60 minutes (when temperature is maintained at 300°C) is less than that of Foam Article Y (-0.45W/g). Therefore, whilst increasing the concentration of partially hydrolysed collagen in the foam composition contributes to a reduction in the heat flow rate of the foam article (as measured by DSC-TGA), the absence of organic acid in the mix means the foam article fails to exhibit an endothermic profile.

### Example 8 - Fourier-transform infrared spectroscopy analysis

Foam Articles X and Y were subjected to Fourier-transform infrared spectroscopy (FTIR) analysis. FTIR analysis measures absorbance at a range of light wavelengths. Figure 9A and 9B show the analysis results for Foam Articles X and Y, respectively. Comparing the graphs disclosed in Figure 9, there is no significant change in the spectra of Foam Articles X and Y. This is as anticipated, as apart from the incorporation of citric acid in Foam Composition X, the compositions are identical. However, an increase in peak intensity is seen in Foam Article X at position 1538cm⁻¹ versus Foam Article Y (at the same position) (45% transmittance for Foam Article X and 30% transmittance for Foam Article Y). These peaks are indicated with arrows in Figures 9A and 9B, respectively.

The increase in peak intensity at position 1538cm⁻¹ indicates C-N stretching at the amide II peak, suggesting a change to protein structure-crosslinking. These results indicate that the presence of citric acid in the foam composition chemically binds the partially hydrolysed bovine collagen to the other components of the foam composition.

Such polymerisation alters the physical properties of the foam article, improving the mechanical strength, density and fire-retardancy of said article.

In conclusion, the inventors have discovered a foam composition for making a foam article and method of making said foam article. The inclusion of partially hydrolysed collagen and an organic acid in the foam composition results in a foam article which meets the same durability, comfort specification and flammability requirements of conventional foam articles made with polyols, whilst reducing the petrochemical content of said foam articles.

The inventors surprisingly discovered that using an organic acid with a partially hydrolysed collagen unexpectedly resulted in a foam composition with substantially improved intumescent properties, meaning no further swelling agents were required. Furthermore, unlike conventional fillers used in polyol foams (which do not chemically bind to the polyols in the composition), the foam article made using a foam composition comprising partially hydrolysed collagen and organic acid forms a polymer network with the polyols and cross-linking agents, creating a foam article which exhibits improved density, mechanical strength and fire-resistance compared to foam articles made using conventional fillers (which do not chemically bind to the other components of the foam composition).

## Claims

1. A foam composition for use in the manufacture of a foam article, the foam composition comprising:
i. 15%w/w to 50%w/w partially hydrolysed collagen;
ii. 30%w/w to 60%w/w one or more polyols;
iii. 15%w/w to 40% w/w cross-linking agent; and
iv. 0.5%w/w to 3%w/w organic acid,
wherein the partially hydrolysed collagen has a Bloom gel strength score of between 300g and 600g, wherein the Bloom gel strength score is determined by measuring the weight in grams required to depress a gel solution a distance of 4 mm with a piston having a cross-sectional area of 1 cm², wherein the gel solution comprises between 5 to 8%w/w of the partially hydrolysed collagen, and wherein the gel solution has been maintained at 10°C for 17 to 18 hours prior to measurement.

2. The foam composition of claim 1, wherein the Bloom gel strength score of between 300g and 600g is measured according to the method defined in ISO9665:1998.

3. The foam composition of claims 1 or 2, wherein the partially hydrolysed collagen is derived from one or more of bovine, ovine, equine, marine and porcine collagen.

4. The foam composition of any preceding claim, wherein:
i. the one or more polyols are selected from a polyester polyol, a polyether polyol, a polycarbonate polyol and an acrylic polyol; and/or
ii. the cross-linking agent is isocyanate.

5. The foam composition of any preceding claim, wherein the partially hydrolysed collagen has a Bloom gel strength score of between 350g and 400g.

6. The foam composition of any preceding claim, wherein the foam composition further comprises between 4%w/w to 10%w/w graphite.

7. A method of manufacturing a foam article using the foam composition of claim 1, the method comprising:
i. combining the organic acid and the partially hydrolysed collagen;
ii. combining the mixture of step (i) with one or more polyols;
iii. Mixing the mixture of step (ii)
iv. Adding the cross-linking agent to the mixture of step (iii);
v. Applying the mixture from step (iv) to a mould;
vi. Heating the mould to between 25°C; and 50°C; and
vii. Cooling the mould to enable curing of the mixture from step (iv).

8. The method of claim 7, wherein the method further comprises heating the mould at step (vi) to between 30°C and 50°C, optionally wherein the temperature of the mixture in the mould at step (vi) does not exceed 70°C.

9. The method of claims 7 to 8, wherein the method further comprises heating the mould at step (vi) for ten minutes or less.

10. The method of claims 7 to 9, wherein the partially hydrolysed collagen is derived from bovine collagen.

11. The method of claims 7 to 10, wherein the method further comprises adding between 4%w/w and 10%w/w graphite at step (iii).

12. The method of claims 7 to 11, wherein the mixture of step (i) has a pH of about 4, optionally wherein the organic acid is selected citric acid, acetic acid, malic acid, formic acid, lactic acid or maleic acid.

13. A foam article manufactured from the foam composition of claims 1 to 6 using the method of claims 7 to 12.

14. Use of the foam article of claim 13, wherein the foam article is for use in:
i. a seat;
ii. a mattress;
iii. a cushion; or
iv. a pillow.

15. A kit comprising:
i. the foam composition of claims 1 to 6; and
ii. a mould.

## Patentansprüche

1. Eine Schaumzusammensetzung zur Verwendung bei der Herstellung eines Schaumartikels, wobei die Schaumzusammensetzung Folgendes beinhaltet:
i. zu 15 Gew.-% bis 50 Gew.-% teilweise hydrolysiertes Kollagen;
ii. zu 30 Gew.-% bis 60 Gew.-% ein oder mehrere Polyole;
iii. zu 15 Gew.-% bis 40 Gew.-% Vernetzungsmittel; und
iv. zu 0,5 Gew.-% bis 3 Gew.-% organische Säure,
wobei das teilweise hydrolysierte Kollagen einen Bloom-Gelfestigkeitswert von zwischen 300 g und 600 g aufweist, wobei der Bloom-Gelfestigkeitswert durch Messen des Gewichts in Gramm, das erforderlich ist, um eine Gellösung mit einem Kolben mit einer Querschnittsfläche von 1 cm² um eine Strecke von 4 mm einzudrücken, bestimmt wird, wobei die Gellösung zwischen 5 und 8 Gew.-% des teilweise hydrolysierten Kollagens beinhaltet und wobei die Gellösung vor der Messung für 17 bis 18 Stunden bei 10 °C gehalten wurde.

2. Schaumzusammensetzung gemäß Anspruch 1, wobei der Bloom-Gelfestigkeitswert von zwischen 300 g und 600 g gemäß dem in ISO9665:1998 definierten Verfahren gemessen wird.

3. Schaumzusammensetzung gemäß Anspruch 1 oder 2, wobei das teilweise hydrolysierte Kollagen von einem oder mehreren von Rinder-, Schaf-, Pferde-, Meeres- und Schweinekollagen abgeleitet ist.

4. Schaumzusammensetzung gemäß einem der vorstehenden Ansprüche, wobei:
i. das eine oder die mehreren Polyole aus einem Polyesterpolyol, einem Polyetherpolyol, einem Polycarbonatpolyol und einem Acrylpolyol ausgewählt sind; und/oder
ii. das Vernetzungsmittel Isocyanat ist.

5. Schaumzusammensetzung gemäß einem der vorstehenden Ansprüche, wobei das teilweise hydrolysierte Kollagen einen Bloom-Gelfestigkeitswert von zwischen 350 g und 400 g aufweist.

6. Schaumzusammensetzung gemäß einem der vorstehenden Ansprüche, wobei die Schaumzusammensetzung ferner zwischen 4 Gew.-% und 10 Gew.-% Graphit beinhaltet.

7. Ein Verfahren zum Herstellen eines Schaumartikels unter Verwendung der Schaumzusammensetzung gemäß Anspruch 1, wobei das Verfahren Folgendes beinhaltet:
i. Kombinieren der organischen Säure und des teilweise hydrolysierten Kollagens;
ii. Kombinieren der Mischung aus Schritt (i) mit einem oder mehreren Polyolen;
iii. Mischen der Mischung aus Schritt (ii)
iv. Zugeben des Vernetzungsmittels zu der Mischung aus Schritt (iii);
v. Aufbringen der Mischung aus Schritt (iv) auf eine Form;
vi. Erwärmen der Form auf zwischen 25 °C und 50 °C; und
vii. Abkühlen der Form, um das Aushärten der Mischung aus Schritt (iv) zu ermöglichen.

8. Verfahren gemäß Anspruch 7, wobei das Verfahren ferner das Erwärmen der Form in Schritt (vi) auf zwischen 30 °C und 50 °C beinhaltet, wobei optional die Temperatur der Mischung in der Form in Schritt (vi) 70 °C nicht überschreitet.

9. Verfahren gemäß den Ansprüchen 7 bis 8, wobei das Verfahren ferner das Erwärmen der Form in Schritt (vi) für zehn Minuten oder weniger beinhaltet.

10. Verfahren gemäß den Ansprüchen 7 bis 9, wobei das teilweise hydrolysierte Kollagen von Rinderkollagen abgeleitet ist.

11. Verfahren gemäß den Ansprüchen 7 bis 10, wobei das Verfahren ferner das Zugeben von zwischen 4 Gew.-% und 10 Gew.-% Graphit in Schritt (iii) beinhaltet.

12. Verfahren gemäß den Ansprüchen 7 bis 11, wobei die Mischung aus Schritt (i) einen pH-Wert von etwa 4 aufweist, wobei optional die organische Säure aus Citronensäure, Essigsäure, Äpfelsäure, Ameisensäure, Milchsäure oder Maleinsäure ausgewählt ist.

13. Ein Schaumartikel, hergestellt aus der Schaumzusammensetzung gemäß den Ansprüchen 1 bis 6 unter Verwendung des Verfahrens gemäß den Ansprüchen 7 bis 12.

14. Eine Verwendung des Schaumartikels gemäß Anspruch 13, wobei der Schaumartikel zur Verwendung in Folgendem dient:
i. einem Sitz;
ii. einer Matratze;
iii. einem Kissen; oder
iv. einem Kopfkissen.

15. Ein Kit, das Folgendes beinhaltet:
i. die Schaumzusammensetzung gemäß den Ansprüchen 1 bis 6; und
ii. eine Form.

## Revendications

1. Une composition de mousse destinée à être utilisée dans la fabrication d'un article en mousse, la composition de mousse comprenant :
i. de 15 % p/p à 50 % p/p de collagène partiellement hydrolysé ;
ii. de 30 % p/p à 60 % p/p d'un ou de plusieurs polyols ;
iii. de 15 % p/p à 40 % p/p d'agent de réticulation ; et
iv. de 0,5 % p/p à 3 % p/p d'acide organique,
dans laquelle le collagène partiellement hydrolysé a un score de force en gel Bloom compris entre 300 g et 600 g, le score de force en gel Bloom étant déterminé en mesurant le poids en grammes requis pour enfoncer une solution de gel d'une distance de 4 mm avec un piston ayant une surface de section transversale de 1 cm², la solution de gel comprenant entre 5 et 8 % p/p du collagène partiellement hydrolysé, et la solution de gel ayant été maintenue à 10 °C pendant 17 à 18 heures avant la mesure.

2. La composition de mousse de la revendication 1, dans laquelle le score de force en gel Bloom compris entre 300 g et 600 g est mesuré selon le procédé défini dans ISO9665:1998.

3. La composition de mousse des revendications 1 ou 2, dans laquelle le collagène partiellement hydrolysé est dérivé d'un ou plusieurs parmi le collagène bovin, ovin, équin, marin et porcin.

4. La composition de mousse de n'importe quelle revendication précédente, dans laquelle :
i. les un ou plusieurs polyols sont sélectionnés parmi un polyol de polyester, un polyol de polyéther, un polyol de polycarbonate et un polyol acrylique ; et/ou
ii. l'agent de réticulation est un isocyanate.

5. La composition de mousse de n'importe quelle revendication précédente, dans laquelle le collagène partiellement hydrolysé a un score de force en gel Bloom compris entre 350 g et 400 g.

6. La composition de mousse de n'importe quelle revendication précédente, dans laquelle la composition de mousse comprend en outre entre 4 % p/p et 10 % p/p de graphite.

7. Un procédé de fabrication d'un article en mousse utilisant la composition de mousse de la revendication 1, le procédé comprenant :
i. la combinaison de l'acide organique et du collagène partiellement hydrolysé ;
ii. la combinaison du mélange de l'étape (i) avec un ou plusieurs polyols ;
iii. le mélangeage du mélange de l'étape (ii)
iv. l'ajout de l'agent de réticulation au mélange de l'étape (iii) ;
v. l'application du mélange de l'étape (iv) dans un moule ;
vi. le chauffage du moule entre 25 °C et 50 °C ; et
vii. le refroidissement du moule afin de permettre le durcissement du mélange de l'étape (iv).

8. Le procédé de la revendication 7, le procédé comprenant en outre le chauffage du moule à l'étape (vi) entre 30 °C et 50 °C, facultativement la température du mélange dans le moule à l'étape (vi) ne dépassant pas 70 °C.

9. Le procédé des revendications 7 à 8, le procédé comprenant en outre le chauffage du moule à l'étape (vi) pendant dix minutes ou moins.

10. Le procédé des revendications 7 à 9, dans lequel le collagène partiellement hydrolysé est dérivé de collagène bovin.

11. Le procédé des revendications 7 à 10, le procédé comprenant en outre l'ajout d'entre 4 % p/p et 10 % p/p de graphite à l'étape (iii).

12. Le procédé des revendications 7 à 11, dans lequel le mélange de l'étape (i) a un pH d'environ 4, facultativement dans lequel l'acide organique est sélectionné parmi l'acide citrique, l'acide acétique, l'acide malique, l'acide formique, l'acide lactique ou l'acide maléique.

13. Un article en mousse fabriqué à partir de la composition de mousse des revendications 1 à 6 en utilisant le procédé des revendications 7 à 12.

14. Utilisation de l'article en mousse de la revendication 13, l'article en mousse étant destiné à être utilisé dans :
i. un siège ;
ii. un matelas ;
iii. un coussin ; ou
iv. un oreiller.

15. Un kit comprenant :
i. la composition de mousse des revendications 1 à 6 ; et
ii. un moule.
